# EUROPEAN PATENT SPECIFICATION

(11) **EP 4 525 356 B1**
(45) Date of publication and mention of the grant of the patent: **30.09.2026**
(21) Application number: 23819117.5
(22) Date of filing: 06.06.2023
(51) Int. Cl.: H04L 9/32, G06F 21/44, H04L 41/08, H04L 43/00, H04L 41/00, H04L 41/28, H04L 9/40

(54) **CLOUD DATA PROCESSING SYSTEM AND METHOD**
CLOUD-DATENVERARBEITUNGSSYSTEM UND -VERFAHREN
SYSTÈME ET PROCÉDÉ DE TRAITEMENT DE DONNÉES EN NUAGE

(30) Priority: 07.06.2022 CN 202210637384; 27.10.2022 CN 202211330225
(43) Date of publication of application: 19.03.2025
(73) Proprietor: Huawei Cloud Computing Technologies Co., Ltd., Guiyang, Guizhou, 550025 (CN)
(72) Inventor: LI, Huan, Guiyang, Guizhou 550025 (CN); ZHU, Hongbing, Guiyang, Guizhou 550025 (CN)
(74) Representative: Körber, Martin Hans
(86) International application number: PCT/CN2023/098616
(87) International publication number: WO 2023/236952

(56) References cited:
- EP-A1- 3 828 653
- WO-A1-2020/207371
- CN-A- 105 027 494
- CN-A- 106 161 507
- CN-A- 106 712 992
- US-A1- 2015 281 233
- US-A1- 2019 206 231

## Description

### TECHNICAL FIELD

This application relates to the field of cloud technologies, and in particular, to a cloud data processing system and method.

### BACKGROUND

A cloud technology provider may deploy a cloud service (usually including necessary hardware and/or software) on different physical locations. This manner may be referred to as a cloud service implemented based on a cloud site (or a distributed cloud, a distributed cloud site, or the like).

Currently, a user of the cloud service may access a cloud site that is geographically close to the user (or is co-located with the user), to obtain a cloud service with a low latency advantage. In addition, in the cloud service implemented based on the cloud site, the user of the cloud service generates local data of the user in the cloud site.

In addition, in the cloud service implemented based on the cloud site, the cloud technology provider is still responsible for operation, maintenance, management, and control on hardware and/or software corresponding to the cloud service. In other words, operation and maintenance data (or referred to as management and control data, operation, maintenance, management, and control data, or the like) of hardware and software corresponding to the cloud service needs to be reported to a cloud platform (or referred to as a public cloud), so that the cloud technology provider learns of the operation and maintenance data of the cloud site on the cloud platform.

However, because the local data generated by the user of the cloud service in the cloud site may relate to service information (or user information, user data, or the like) of the user, the user does not expect the local data to be obtained by a device other than the cloud site. Therefore, in a process in which the cloud site reports the operation and maintenance data to the cloud platform, how to enable the operation and maintenance data sent by the cloud site to the cloud platform to meet a requirement of the user is an urgent technical problem to be resolved.

EP 3 828 653 A1 discloses technology for providing data from an internal data processing system of an industrial plant to an external data processing system. US 2015/281233 A1 discloses technology related to the authentication of cloud agents that collect and/or process industrial data.

### SUMMARY

This application provides a cloud data processing system and method, so that data sent by a cloud site to a cloud platform meets a configuration requirement of a user of a cloud service provided by the cloud site, to improve trust of the user of the cloud service in the cloud service. The present invention is defined by the enclosed claims. In the following description, embodiments which are not covered by the claims are to be considered as examples necessary for understanding the invention.

A first aspect of this application provides a cloud data processing system, including a cloud site, a cloud platform, and a management and control module. The management and control module is configured to manage and control data sent by the cloud site to the cloud platform.

In a process in which the cloud site provides a cloud service, the cloud site generates first data that needs to be reported to the cloud platform, and the cloud site sends the first data to the management and control module.

The management and control module verifies the first data based on a first available data pool after receiving the first data that is from the cloud site and that needs to be reported to the cloud platform, and sends the first data to the cloud platform when determining that the first data passes the verification based on the first available data pool. The first available data pool is a data pool determined based on configuration information of a user of the cloud service provided by the cloud site.

After receiving the first data from the management and control module, the cloud platform stores the first data.

According to the technical solution, in the process in which the cloud site in the cloud data processing system provides the cloud service, the first data sent by the cloud site to the cloud platform needs to be verified by the management and control module. In other words, the management and control module performs verification based on the first available data pool, and sends the first data to the cloud platform when the first data passes the verification. The first available data pool is the data pool determined based on the configuration information of the user of the cloud service provided by the cloud site. Therefore, in the process in which the cloud site provides the cloud service, the first data sent by the cloud site to the cloud platform is data that passes the verification of the management and control module, so that the data sent by the cloud site to the cloud platform meets a configuration requirement of the user of the cloud service provided by the cloud site, to improve trust of the user of the cloud service in the cloud service.

It should be understood that the cloud site may include one or more servers (or virtual machines, containers, or the like), and the management and control module may be disposed in the one or more servers (or the virtual machines, the containers, or the like), or the management and control module may be independently disposed in a device other than the one or more servers (or the virtual machines, the containers, or the like). This is not limited in this application. In addition, the management and control module is a module configured to manage and control the data sent by the cloud site to the cloud platform. The management and control module may alternatively have another name, for example, a server (or a virtual machine, a container, or the like) configured to provide a management and control service, a management and control server (or a management and control virtual machine, a management and control container, or the like), a network watch dog (network watch dog, NWD), or another name. In this application, only an example in which the name is a management and control module is used for description.

In a possible implementation of the first aspect, the management and control module is further configured to send first information to the cloud platform, where the first information includes the first available data pool and signature information of the management and control module for the first available data pool. The cloud platform is further configured to send second information to the management and control module, where the second information includes the first available data pool and signature information of the cloud platform for the first available data pool, or the second information includes the first available data pool and signature information of the cloud platform for the first information. The cloud platform is further configured to verify the first data based on the first available data pool, and store the first data after determining that the first data passes the verification based on the first available data pool.

According to the technical solution, the management and control module and the cloud platform may further exchange the signature information of the management and control module for the first available data pool and the signature information of the cloud platform for the first available data pool, so that both the management and control module and the cloud platform can obtain a first available data pool that passes dual authentication of the management and control module and the cloud platform. Therefore, for the management and control module, the management and control module may verify the data based on the first available data pool that passes the dual authentication, so that data sent by the management and control module to the cloud platform is valid data that passes authentication of the cloud platform, and the management and control module does not send invalid data to the cloud platform. Correspondingly, for the cloud platform, the cloud platform may verify the data based on the first available data pool that passes the dual authentication, so that data stored on the cloud platform is valid data that passes the authentication of the cloud platform, and the cloud platform does not store invalid data, to improve security of the data stored on the cloud platform.

In a possible implementation of the first aspect, the management and control module is further configured to send the first information to the cloud site, and the cloud site is further configured to generate the first data based on the first available data pool.

According to the technical solution, the management and control module may further send, to the cloud site, the first information that includes the first available data pool and the signature information of the management and control module for the first available data pool, so that the cloud site generates valid data based on the first available data pool that passes the authentication of the management and control module, and the cloud site does not generate and send invalid data, to simplify a subsequent operation of the management and control module.

In a possible implementation of the first aspect, the first data pool includes N groups of data, each of the N groups of data includes category information of available data and value information of the available data, and N is a positive integer. The management and control module is further configured to obtain a second available data pool including M groups of data, and determine the first available data pool in the M groups of data based on the configuration information. Each of the M groups of data includes category information of available data and value information of the available data, and M is a positive integer greater than or equal to N.

According to the technical solution, the management and control module may determine, based on the configuration information of the user of the cloud service provided by the cloud site, the first available data pool including the N groups of data from the second available data pool including the M groups of data, where M is the positive integer greater than or equal to N. Therefore, the user of the cloud service is supported in customizing, based on the configuration information, the first available data pool that is in the management and control module and that is for performing data verification, to ensure that data subsequently sent by the management and control module to the cloud platform meets a requirement of the customization.

Optionally, the second available data pool obtained by the management and control module is from the cloud platform, the second available data pool obtained by the management and control module is data written by an administrator into the management and control module, or the second available data pool is obtained by the management and control module in another manner. This is not limited herein.

It may be understood that the category information of the available data includes a category name of the available data, or the category information of the available data includes an index corresponding to the category name of the available data. Similarly, the value information of the available data may include a value range of the available data, or the value information of the available data includes an index corresponding to the value range of the available data.

In a possible implementation of the first aspect, the first available data pool further includes signature information corresponding to each of the N groups of data, and the signature information includes signature information of the management and control module for each group of data and/or signature information of the cloud platform for each group of data. The management and control module is further configured to: when a data sending mode is a non-direct connection mode, determine signature information corresponding to the first data in the first available data pool, and send the signature information corresponding to the first data to the cloud platform.

According to the technical solution, a data sending unit used by the management and control module to send data to the cloud platform may support the non-direct connection mode. In a non-direct connection module, the management and control module may determine the signature information corresponding to the first data in the first available data pool, and send the signature information corresponding to the first data to the cloud platform, so that the cloud platform verifies the received first data based on the signature information in the first available data pool, to avoid data tampering and improve security.

In a possible implementation of the first aspect, the management and control module is further configured to: when a data sending mode is a direct connection mode, send signature information of the management and control module for the first data to the cloud platform.

According to the technical solution, a data sending unit used by the management and control module to send data to the cloud platform may support the direct connection mode. In a direct connection module, the management and control module may send the signature information of the management and control module for the first data to the cloud platform, so that the cloud platform verifies the received first data based on the signature information of the management and control module, to avoid data tampering, improve security, and simplify operations of the management and control module and the cloud platform.

It may be understood that a requirement of the non-direct connection mode for data security is higher than a requirement of the direct connection mode for the data security. The non-direct connection mode may alternatively be replaced with another description, for example, a high security mode, a trust mode, or an enhanced verification mode. Similarly, the direct connection mode may alternatively be replaced with another description, for example, a low security mode or a non-trust mode.

In a possible implementation of the first aspect, the first available data pool further includes a sending policy, and the sending policy includes sending time and/or a sending sequence. The management and control module is further configured to send the first data to the cloud platform according to the sending policy.

According to the technical solution, the first available data pool determined based on the configuration information of the user of the cloud service provided by the cloud site may further include the sending policy, so that the management and control module can send the first data to the cloud platform according to the sending policy configured by the user, to further improve the trust of the user of the cloud service in the cloud service.

In a possible implementation of the first aspect, the system further includes an audit system. The management and control module is further configured to send the first data to the audit system, so that the audit system audits the first data.

According to the technical solution, the management and control module may further send the first data to the audit system, so that the user of the cloud service can perform audit (including real-time audit, post-event audit, or the like), based on the audit system, on the first data sent by the management and control module to the cloud platform, to further improve the trust of the user of the cloud service in the cloud service.

A second aspect of this application provides a cloud data processing method based on a management and control module. The method is performed by the management and control module, the method is performed by a part of components (for example, a processor, a chip, or a chip system) in the management and control module, or the method is implemented by a logic module or software that can implement all or a part of functions of the management and control module. In the second aspect and possible implementations of the second aspect, an example in which the method is performed by the management and control module is used for description. The management and control module may be a device such as a server, a virtual machine, or a container. In the method, the management and control module receives first data from a cloud site, where the management and control module is configured to manage and control data sent by the cloud site to a cloud platform. The management and control module verifies the first data based on a first available data pool, where the first available data pool is a data pool determined based on configuration information of a user of a cloud service provided by the cloud site. The management and control module sends the first data to the cloud platform when determining that the first data passes the verification based on the first available data pool.

According to the technical solution, in a cloud data processing system, the management and control module is configured to manage and control the data sent by the cloud site to the cloud platform. The management and control device verifies the first data based on the first available data pool after receiving the first data from the cloud site, and sends the first data to the cloud platform when determining that the first data passes the verification based on the first available data pool. The first available data pool is the data pool determined based on the configuration information of the user of the cloud service provided by the cloud site. Therefore, in a process in which the cloud site provides the cloud service, the first data sent by the cloud site to the cloud platform is data that passes the verification of the management and control module, so that the data sent by the cloud site to the cloud platform meets a configuration requirement of the user of the cloud service provided by the cloud site, to improve trust of the user of the cloud service in the cloud service.

It should be understood that the cloud site may include one or more servers (or virtual machines, containers, or the like), and the management and control module may be disposed in the one or more servers (or the virtual machines, the containers, or the like), or the management and control module may be independently disposed in a device other than the one or more servers (or the virtual machines, the containers, or the like). This is not limited in this application. In addition, the management and control module is a module configured to manage and control the data sent by the cloud site to the cloud platform. The management and control module may alternatively have another name, for example, a server (or a virtual machine, a container, or the like) configured to provide a management and control service, a management and control server (or a management and control virtual machine, a management and control container, or the like), a network watch dog (network watch dog, NWD), or another name. In this application, only an example in which the name is a management and control module is used for description.

In a possible implementation of the second aspect, the first data pool includes N groups of data, each of the N groups of data includes category information of available data and value information of the available data, and N is a positive integer. Before the management and control module verifies the first data based on a first available data pool, the method further includes: The management and control module receives a second available data pool from the cloud platform, where the second available data pool includes M groups of data, each of the M groups of data includes category information of available data and value information of the available data, and M is a positive integer greater than or equal to N. The management and control module determines the first available data pool in the M groups of data based on the configuration information.

According to the technical solution, the management and control module may determine, based on the configuration information of the user of the cloud service provided by the cloud site, the first available data pool including the N groups of data from the second available data pool including the M groups of data, where M is the positive integer greater than or equal to N. Therefore, the user of the cloud service is supported in customizing, based on the configuration information, the first available data pool that is in the management and control module and that is for performing data verification, to ensure that data subsequently sent by the management and control module to the cloud platform meets a requirement of the customization.

In a possible implementation of the second aspect, the configuration information includes at least one of an available data deletion instruction and an available data modification instruction.

According to the technical solution, in an implementation in which the second available data pool obtained by the management and control module is from the cloud platform, the user of the cloud service may perform a customized operation such as deletion or modification, to ensure that data subsequently sent by the management and control module to the cloud platform meets a requirement of the customized operation.

Optionally, in addition to being from the cloud platform as described above, the second available data pool obtained by the management and control module may alternatively be data written by an administrator into the management and control module, or the second available data pool is obtained by the management and control module in another manner. This is not limited herein.

It may be understood that the category information of the available data includes a category name of the available data, or the category information of the available data includes an index corresponding to the category name of the available data. Similarly, the value information of the available data may include a value range of the available data, or the value information of the available data includes an index corresponding to the value range of the available data.

In a possible implementation of the second aspect, the method further includes: The management and control module sends first information to the cloud platform, where the first information includes the first available data pool and signature information of the management and control module for the first available data pool. The management and control module receives second information from the cloud platform, where the second information includes the first available data pool and signature information of the cloud platform for the first available data pool, or the second information includes the first available data pool and signature information of the cloud platform for the first information.

According to the technical solution, the management and control module and the cloud platform may further exchange the signature information of the management and control module for the first available data pool and the signature information of the cloud platform for the first available data pool, so that both the management and control module and the cloud platform can obtain a first available data pool that passes dual authentication of the management and control module and the cloud platform. Therefore, for the management and control module, the management and control module may verify the data based on the first available data pool that passes the dual authentication, so that data sent by the management and control module to the cloud platform is valid data that passes authentication of the cloud platform, and the management and control module does not send invalid data to the cloud platform. Correspondingly, for the cloud platform, the cloud platform may subsequently verify the data based on the first available data pool that passes the dual authentication, so that data stored on the cloud platform is valid data that passes the authentication of the cloud platform, and the cloud platform does not store invalid data, to improve security of the data stored on the cloud platform.

In a possible implementation of the second aspect, the method further includes: The management and control module sends the first information to the cloud site, where the first information includes the first available data pool and the signature information of the management and control module for the first available data pool.

According to the technical solution, the management and control module may further send, to the cloud site, the first information that includes the first available data pool and the signature information of the management and control module for the first available data pool, so that the cloud site generates valid data based on the first available data pool that passes the authentication of the management and control module, and the cloud site does not generate and send invalid data, to simplify a subsequent operation of the management and control module.

In a possible implementation of the second aspect, when it is determined that the first data passes the verification based on the first available data pool, the method further includes: The management and control module sends the first data to the audit system.

According to the technical solution, the management and control module may further send the first data to the audit system, so that the user of the cloud service can perform audit (including real-time audit, post-event audit, or the like), based on the audit system, on the first data sent by the management and control module to the cloud platform, to further improve the trust of the user of the cloud service in the cloud service.

In a possible implementation of the second aspect, the first available data pool further includes a sending policy, and the sending policy includes sending time and/or a sending sequence. That the management and control module sends the first data to the cloud platform includes: The management and control module sends the first data to the cloud platform according to the sending policy.

According to the technical solution, the first available data pool determined based on the configuration information of the user of the cloud service provided by the cloud site may further include the sending policy, so that the management and control module can send the first data to the cloud platform according to the sending policy configured by the user, to further improve the trust of the user of the cloud service in the cloud service.

In a possible implementation of the second aspect, the first available data pool further includes signature information corresponding to each of the N groups of data, and the signature information includes signature information of the management and control module for each group of data and/or signature information of the cloud platform for each group of data. When it is determined that the first data passes the verification based on the first available data pool, the method further includes: When a data sending mode is a non-direct connection mode, the management and control module determines signature information corresponding to the first data based on the first available data pool, and sends the signature information corresponding to the first data to the cloud platform.

According to the technical solution, a data sending unit used by the management and control module to send data to the cloud platform may support the non-direct connection mode. In a non-direct connection module, the management and control module may determine the signature information corresponding to the first data in the first available data pool, and send the signature information corresponding to the first data to the cloud platform, so that the cloud platform verifies the received first data based on the signature information in the first available data pool, to avoid data tampering and improve security.

In a possible implementation of the second aspect, when it is determined that the first data passes the verification based on the first available data pool, the method further includes: When a data sending mode is a direct connection mode, the management and control module sends signature information of the management and control module for the first data to the cloud platform.

According to the technical solution, a data sending unit used by the management and control module to send data to the cloud platform may support the direct connection mode. In a direct connection module, the management and control module may send the signature information of the management and control module for the first data to the cloud platform, so that the cloud platform verifies the received first data based on the signature information of the management and control module, to avoid data tampering, improve security, and simplify operations of the management and control module and the cloud platform.

It may be understood that a requirement of the non-direct connection mode for data security is higher than a requirement of the direct connection mode for the data security. The non-direct connection mode may alternatively be replaced with another description, for example, a high security mode, a trust mode, or an enhanced verification mode. Similarly, the direct connection mode may alternatively be replaced with another description, for example, a low security mode or a non-trust mode.

A third aspect of this application provides a cloud data processing method based on a cloud platform. The method is performed by the cloud platform, the method is performed by a part of components (for example, a processor, a chip, or a chip system) in the cloud platform, or the method is implemented by a logic module or software that can implement all or a part of functions of the cloud platform. In the third aspect and possible implementations of the third aspect, an example in which the method is performed by the cloud platform is used for description. In the method, the cloud platform receives first data from a management and control module. The cloud platform verifies the first data based on a first available data pool, where the first available data pool is a data pool determined based on configuration information of a user of a cloud service provided by a cloud site. The cloud platform stores the first data when determining that the first data passes the verification based on the first available data pool.

According to the technical solution, in a cloud data processing system, the management and control module is configured to manage and control the data sent by the cloud site to the cloud platform. The cloud platform verifies the first data based on the first available data pool after receiving the first data from the management and control device, and stores the first data when determining that the first data passes the verification based on the first available data pool. The first available data pool is the data pool determined based on the configuration information of the user of the cloud service provided by the cloud site. Therefore, the first data stored on the cloud platform is data that passes the verification of the cloud platform, so that the data stored on the cloud platform meets a configuration requirement of the user of the cloud service provided by the cloud site, to improve trust of the user of the cloud service in the cloud service. In addition, the data stored on the cloud platform is valid data that passes the authentication of the cloud platform, so that the cloud platform does not store the invalid data, to improve the security of the data stored on the cloud platform.

In a possible implementation of the third aspect, before the cloud platform verifies the first data based on a first available data pool, the method further includes: The cloud platform receives first information from the management and control module, where the first information includes the first available data pool and signature information of the management and control module for the first available data pool. The cloud platform sends second information to the management and control module, where the second information includes the first available data pool and signature information of the cloud platform for the first available data pool, or the second information includes the first available data pool and signature information of the cloud platform for the first information.

According to the technical solution, the management and control module and the cloud platform may further exchange the signature information of the management and control module for the first available data pool and the signature information of the cloud platform for the first available data pool, so that both the management and control module and the cloud platform can obtain a first available data pool that passes dual authentication of the management and control module and the cloud platform. Therefore, for the management and control module, the management and control module may verify the data based on the first available data pool that passes the dual authentication, so that data sent by the management and control module to the cloud platform is valid data that passes authentication of the cloud platform, and the management and control module does not send invalid data to the cloud platform. Correspondingly, for the cloud platform, the cloud platform may subsequently verify the data based on the first available data pool that passes the dual authentication, so that data stored on the cloud platform is valid data that passes the authentication of the cloud platform, and the cloud platform does not store invalid data, to improve security of the data stored on the cloud platform.

In a possible implementation of the third aspect, the first data pool includes N groups of data, each of the N groups of data includes category information of available data and value information of the available data, and N is a positive integer. The method further includes: The cloud platform sends a second available data pool to the management and control module, so that the management and control module determines the first available data pool based on the second available data pool, where the second available data pool includes M groups of data, each of the M groups of data includes category information of available data and value information of the available data, and M is a positive integer.

According to the technical solution, the cloud platform may send the second available data pool to the management and control device, so that the management and control module can determine, based on the configuration information of the user of the cloud service provided by the cloud site, the first available data pool including the N groups of data from the second available data pool including the M groups of data, where M is a positive integer greater than or equal to N. Therefore, the user of the cloud service is supported in customizing, based on the configuration information, the first available data pool that is in the management and control module and that is for performing data verification, to ensure that data subsequently sent by the management and control module to the cloud platform meets a requirement of the customization.

In a possible implementation of the third aspect, the first available data pool further includes signature information corresponding to each of the N groups of data, and the signature information includes signature information of the management and control module for each group of data and/or signature information of the cloud platform for each group of data. When a data sending mode is a non-direct connection mode, the method further includes: The cloud platform receives signature information corresponding to the first data from the management and control module.

According to the technical solution, a data sending unit used by the management and control module to send data to the cloud platform may support the non-direct connection mode. In a non-direct connection module, the management and control module may determine the signature information corresponding to the first data in the first available data pool, and send the signature information corresponding to the first data to the cloud platform, so that the cloud platform verifies the received first data based on the signature information in the first available data pool, to avoid data tampering and improve security.

In a possible implementation of the third aspect, when a data sending mode is a direct connection mode, the method further includes: The cloud platform receives signature information of the management and control module for the first data from the management and control module.

According to the technical solution, a data sending unit used by the management and control module to send data to the cloud platform may support the direct connection mode. In a direct connection module, the management and control module may send the signature information of the management and control module for the first data to the cloud platform, so that the cloud platform verifies the received first data based on the signature information of the management and control module, to avoid data tampering, improve security, and simplify operations of the management and control module and the cloud platform.

It may be understood that a requirement of the non-direct connection mode for data security is higher than a requirement of the direct connection mode for the data security. The non-direct connection mode may alternatively be replaced with another description, for example, a high security mode, a trust mode, or an enhanced verification mode. Similarly, the direct connection mode may alternatively be replaced with another description, for example, a low security mode or a non-trust mode.

A fourth aspect of this application provides a cloud data processing method based on a cloud site. The method is performed by the cloud site, the method is performed by a part of components (for example, a processor, a chip, or a chip system) in the cloud site, or the method is implemented by a logic module or software that can implement all or a part of functions of the cloud site. In the fourth aspect and possible implementations of the fourth aspect, an example in which the method is performed by the cloud site is used for description. In the method, the cloud site receives first information from a management and control module, where the first information includes a first available data pool, and the first available data pool is a data pool determined based on configuration information of a user of a cloud service provided by the cloud site. The cloud site generates first data based on the first available data pool. The cloud site sends the first data to the management and control module.

According to the technical solution, after receiving the first available data pool from the management and control module, and generating the first data based on the first available data pool, the cloud site sends the first data to the management and control module. The first available data pool is the data pool determined based on the configuration information of the user of the cloud service provided by the cloud site. Therefore, in a process in which the cloud site provides the cloud service, the first data sent by the cloud site to the cloud platform is data that passes the verification of the management and control module, so that the data sent by the cloud site to the cloud platform meets a configuration requirement of the user of the cloud service provided by the cloud site, to improve trust of the user of the cloud service in the cloud service. In addition, the cloud site generates valid data based on the first available data pool indicated by the management and control module, so that the cloud site does not generate and send invalid data.

In a possible implementation of the fourth aspect, the first information includes signature information of the cloud platform for the first available data pool, and/or the first information includes signature information of the management and control module for the first available data pool.

According to the technical solution, the first information received by the cloud site may further include the signature information of the cloud platform for the first available data pool, and/or the first information includes the signature information of the management and control module for the first available data pool, so that the cloud site generates the valid data based on the first available data pool that passes the authentication of the management and control module and/or authentication of the cloud platform, and the cloud site does not generate and send the invalid data, to simplify a subsequent operation of the management and control module.

A fifth aspect of this application provides a management and control module, including: a receiving unit, configured to receive first data from a cloud site, where the management and control module is configured to manage and control data sent by the cloud site to a cloud platform; a processing unit, configured to verify the first data based on a first available data pool, where the first available data pool is a data pool determined based on configuration information of a user of a cloud service provided by the cloud site; and a sending unit, configured to send the first data to the cloud platform when the processing unit determines that the first data passes the verification based on the first available data pool.

In a possible implementation of the fifth aspect, the first data pool includes N groups of data, each of the N groups of data includes category information of available data and value information of the available data, and N is a positive integer. The receiving unit is further configured to receive a second available data pool from the cloud platform, where the second available data pool includes M groups of data, each of the M groups of data includes category information of available data and value information of the available data, and M is a positive integer greater than or equal to N. The processing unit is further configured to determine the first available data pool in the M groups of data based on the configuration information. The sending unit is further configured to send first information to the cloud platform, where the first information includes the first available data pool and signature information of the management and control module for the first available data pool.

In a possible implementation of the fifth aspect, the sending unit is further configured to send first information to the cloud platform, where the first information includes the first available data pool and signature information of the management and control module for the first available data pool. The receiving unit is further configured to receive second information from the cloud platform, where the second information includes the first available data pool and signature information of the cloud platform for the first available data pool, or the second information includes the first available data pool and signature information of the cloud platform for the first information.

In a possible implementation of the fifth aspect, the configuration information includes at least one of an available data deletion instruction and an available data modification instruction.

In a possible implementation of the fifth aspect, the sending unit is further configured to send the first data to an audit system.

In the fifth aspect of embodiments of this application, the composition modules of the management and control module may be further configured to perform the steps performed in the possible implementations of the second aspect, and achieve corresponding technical effects. For details, refer to the second aspect. Details are not described herein again.

A sixth aspect of this application provides a cloud platform, including: a receiving unit, configured to receive first data from a management and control module; and a processing unit, configured to verify the first data based on a first available data pool, where the first available data pool is a data pool determined based on configuration information of a user of a cloud service provided by a cloud site. The processing unit is further configured to store the first data when determining that the first data passes the verification based on the first available data pool.

In a possible implementation of the sixth aspect, the cloud platform further includes a sending unit. The sending unit is configured to send a second available data pool to the management and control module, where the second available data pool includes M groups of data, each of the M groups of data includes category information of available data and value information of the available data, and M is a positive integer greater than or equal to N.

In the sixth aspect of embodiments of this application, the composition modules of the cloud platform may be further configured to perform the steps performed in the possible implementations of the third aspect, and achieve corresponding technical effects. For details, refer to the third aspect. Details are not described herein again.

A seventh aspect of this application provides a cloud site, including: a receiving unit, configured to receive first information from a management and control module, where the first information includes a first available data pool, and the first available data pool is a data pool determined based on configuration information of a user of a cloud service provided by the cloud site; a processing unit, configured to generate first data based on the first available data pool; and a sending unit, configured to send the first data to the management and control module.

In the seventh aspect of embodiments of this application, the composition modules of the cloud site may be further configured to perform the steps performed in the possible implementations of the fourth aspect, and achieve corresponding technical effects. For details, refer to the fourth aspect. Details are not described herein again.

An eighth aspect of this application provides a management and control module. The management and control module includes a storage and a processor. The storage stores code, the processor is configured to execute the code, and when the code is executed, the management and control module performs the method according to the second aspect and the possible implementations of the second aspect.

A ninth aspect of this application provides a cloud platform. The cloud platform includes a storage and a processor. The storage stores code, the processor is configured to execute the code, and when the code is executed, the cloud platform performs the method according to the third aspect and the possible implementations of the third aspect.

A tenth aspect of this application provides a cloud site. The cloud platform includes a storage and a processor. The storage stores code, the processor is configured to execute the code, and when the code is executed, the cloud site performs the method according to the third aspect and the possible implementations of the third aspect.

An eleventh aspect of this application provides a computer storage medium. The computer storage medium stores a computer program, and when the program is executed by a computer, the computer is enabled to perform the method according to any one of the second aspect or the possible implementations of the second aspect, the computer is enabled to implement the method according to any one of the third aspect or the possible implementations of the third aspect, or the computer is enabled to implement the method according to any one of the fourth aspect or the possible implementations of the fourth aspect.

A twelfth aspect of this application provides a computer program product. The computer program product stores instructions, and when the instructions are executed by a computer, the computer is enabled to perform the method according to any one of the second aspect or the possible implementations of the second aspect, the computer is enabled to implement the method according to any one of the third aspect or the possible implementations of the third aspect, or the computer is enabled to implement the method according to any one of the fourth aspect or the possible implementations of the fourth aspect.

It can be learned from the foregoing technical solution that, in the process in which the cloud site provides the cloud service, the first data sent by the cloud site to the cloud platform needs to be verified by the management and control module. In other words, the management and control module performs verification based on the first available data pool, and sends the first data to the cloud platform when the first data passes the verification. The first available data pool is the data pool determined based on the configuration information of the user of the cloud service provided by the cloud site. Therefore, in the process in which the cloud site provides the cloud service, the first data sent by the cloud site to the cloud platform is the data that passes the verification of the management and control module, so that the data sent by the cloud site to the cloud platform meets the configuration requirement of the user of the cloud service provided by the cloud site, to improve the trust of the user of the cloud service in the cloud service.

In some implementations, the management and control module and the cloud platform may further exchange the signature information of the management and control module for the first available data pool and the signature information of the cloud platform for the first available data pool, so that both the management and control module and the cloud platform can obtain a first available data pool that passes dual authentication of the management and control module and the cloud platform. Therefore, for the management and control module, the management and control module may verify the data based on the first available data pool that passes the dual authentication, so that data sent by the management and control module to the cloud platform is valid data that passes authentication of the cloud platform, and the management and control module does not send invalid data to the cloud platform. Correspondingly, for the cloud platform, the cloud platform may verify the data based on the first available data pool that passes the dual authentication, so that data stored on the cloud platform is valid data that passes the authentication of the cloud platform, and the cloud platform does not store invalid data, to improve security of the data stored on the cloud platform.

### BRIEF DESCRIPTION OF DRAWINGS

FIG. 1a is a diagram of a cloud data processing system according to this application;
FIG. 1b is a diagram of cloud data processing according to this application;
FIG. 2 is a diagram of a cloud data processing system according to this application;
FIG. 3 is another diagram of a cloud data processing system according to this application;
FIG. 4 is a diagram of a cloud data processing method according to this application;
FIG. 5 is a diagram of cloud data exchange according to this application;
FIG. 6 is another diagram of a cloud data processing method according to this application;
FIG. 7 is another diagram of a cloud data processing method according to this application;
FIG. 8 is another diagram of a cloud data processing method according to this application;
FIG. 9 is another diagram of a cloud data processing method according to this application;
FIG. 10 is another diagram of a cloud data processing method according to this application;
FIG. 11 is a diagram of a management and control module according to this application;
FIG. 12 is a diagram of a cloud platform according to this application;
FIG. 13 is a diagram of a cloud site according to this application;
FIG. 14 is another diagram of a management and control module according to this application;
FIG. 15 is another diagram of a cloud platform according to this application; and
FIG. 16 is another diagram of a cloud site according to this application.

### DESCRIPTION OF EMBODIMENTS

In this application, unless otherwise specified, for same or similar parts in embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

It may be understood that in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with another feature based on a requirement. Correspondingly, the apparatus provided in embodiments of this application may also correspondingly implement these features or functions. Details are not described herein.

In descriptions of this application, "a plurality of" means two or more than two unless otherwise specified. "At least one of the following items (pieces)" or an expression similar thereto means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe technical solutions in embodiments of this application, words such as "first" and "second" are used in embodiments of this application to distinguish between same items or similar items that have basically the same functions or purposes. A person skilled in the art may understand that the words such as "first" and "second" do not limit a quantity or an execution sequence, and the words such as "first" and "second" do not indicate a definite difference. In addition, in embodiments of this application, the word such as "example" or "for example" represents giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

For ease of understanding the method provided in embodiments of this application, the following describes a system architecture of the method provided in embodiments of this application. It may be understood that the system architecture described in embodiments of this application is intended to describe the technical solutions in embodiments of this application more clearly, and does not constitute any limitation on the technical solutions provided in embodiments of this application.

A cloud technology provider may deploy a cloud service (usually including necessary hardware and/or software) to different physical locations. This manner may be referred to as a cloud service implemented based on a cloud site (or a distributed cloud, a distributed cloud site, or the like).

Currently, a user of the cloud service may access a cloud site whose geographical location is close to that of the user (or deployed at a same location as that of the user), to obtain a cloud service with a low latency advantage. In addition, in the cloud service implemented based on the cloud site, the user of the cloud service generates local data of the user in the cloud site.

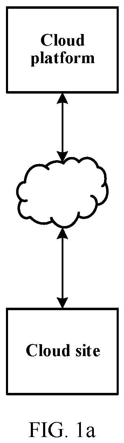

In addition, in the cloud service implemented based on the cloud site, the cloud technology provider is still responsible for operation, maintenance, management, and control of hardware and/or software corresponding to the cloud service. In other words, operation and maintenance data (or referred to as management and control data, operation, maintenance, management, and control data, or the like) of hardware and software corresponding to the cloud service needs to be reported to a cloud platform (or referred to as a public cloud), so that the cloud technology provider learns of the operation and maintenance data of the cloud site on the cloud platform. As shown in FIG. 1a, in a process in which a cloud site provides a cloud service, the cloud site reports, via a network, operation and maintenance data generated in the cloud site to a cloud platform, so that the cloud platform manages the cloud site based on the obtained operation and maintenance data.

During cloud evolution, it is possible that a part of applications of the user of the cloud service cannot directly run on the cloud platform and needs to run on the cloud site. The part of applications include but are not limited to the following:
1. an application that is deployed by the user of the cloud service and that is connected to an industrial system, where the application needs to have an excessively low latency (for example, the latency needs to be less than 10 milliseconds);
2. an application whose data cannot leave a local network and needs to reside locally as required by laws or regulations;
3. an application that is deployed by the user of the cloud service and that frequently interacts with a local internet technology (internet technology, IT) system, resulting in low access efficiency implemented through a cloud; and
4. an application that is deployed by the user of the cloud service and branches of which are excessively far away from each other and need to be managed and controlled in a unified manner, but cannot be migrated to the cloud in a unified manner due to an efficiency issue.

In the applications that need to run on the cloud site, local service data that needs to reside on the cloud site is generated. If the local service data relates to service information (or user information, user data, or the like) of the user, the user does not expect the local service data to be obtained by a device other than the cloud site. In other words, the user of the cloud service does not expect the local service data to be uploaded to the cloud platform.

Therefore, how to ensure that the local service data of the user of the cloud service is not reported to the cloud platform as operation and maintenance data is an urgent problem to be resolved. The problem mainly includes how to ensure that the data does not leave the local network in a running period and a maintenance period, which are separately described below.

In the running period, that is, in a hybrid cloud scenario, in a normal running process, there is an application in a user data center, and there is a part of applications deployed on the public cloud. In the running period, the public cloud needs to collect some running and monitoring data. Therefore, the problem is specifically how to ensure that the data of the user that cannot be reported to the public cloud is not sent to the public cloud during collection.

In the maintenance period, a local data center is remotely maintained. For the maintenance period, the problem may be resolved through data encryption and local key storage. For the running period, the problem is specifically that a local distributed cloud needs continuous operation and maintenance, and therefore monitoring data of a system needs to be continuously reported to the cloud platform.

However, because the local data generated by the user of the cloud service in the cloud site may relate to the service information (or the user information, the user data, or the like) of the user, the user does not expect the local data to be obtained by the device other than the cloud site. Therefore, in a process in which the cloud site reports the operation and maintenance data to the cloud platform, how to enable the operation and maintenance data sent by the cloud site to the cloud platform to meet a requirement of the user is an urgent technical problem to be resolved.

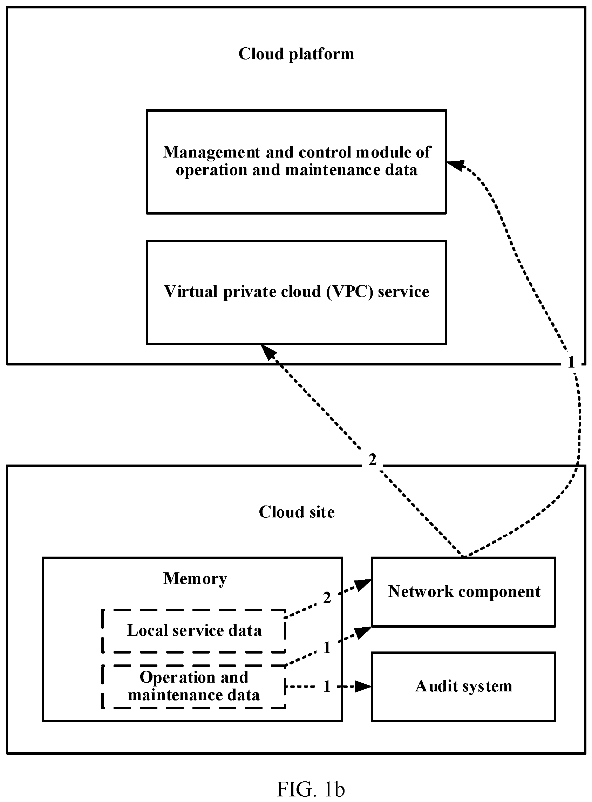

In a possible implementation, to improve trust of the user of the cloud service in the cloud service, an audit system may be added to the cloud site, where the audit system is configured to perform post-event audit on data sent by the cloud site to the cloud platform. For example, an implementation of the audit system may be shown in FIG. 1b.

In FIG. 1b, a cloud site may include a memory, a network component, and the audit system. In a process in which the cloud site provides a cloud service, the memory stores local service data generated by a user of the cloud service and operation and maintenance data of the cloud site. Through an execution process of an arrow "1" in FIG. 1b, the network component in the cloud site may send the operation and maintenance data in the memory to a management and control module that is of the operation and maintenance data and that is in a cloud platform, so that the cloud platform manages and controls the cloud platform based on the operation and maintenance data. In addition, the audit system may further exist in the cloud site, and the audit system is configured to audit the operation and maintenance data transmitted by the network component.

Optionally, in FIG. 1b, the local service data generated in the cloud site may be encrypted for storage, to improve data security.

Optionally, in FIG. 1b, if the local service data generated in the cloud site needs to be uploaded to the cloud platform, through an execution process of an arrow "2" in FIG. 1b, the local service data may also be uploaded to a virtual private cloud (virtual private cloud, VPC) service module in the cloud platform by using the network component.

Optionally, data passing through the network component may be encrypted data, and an encryption algorithm for the encrypted data may be locally configured by the cloud site, or may be provided by the cloud platform. This is not limited herein.

In an architecture shown in FIG. 1b, the local service data generated in the cloud site may be the data that is mentioned above and that needs to locally reside. Although the local service data may be encrypted for storage in the memory to improve the data security, because the local service data and the operation and maintenance data in the cloud site share the memory, the data in the memory may be mutually accessed, and the local service data may be mixed into the operation and maintenance data. A generation rule of the operation and maintenance data is defined by the cloud platform, and the cloud site cannot learn of specific semantics of the operation and maintenance data. Although the audit system can obtain a data flow of the transmitted operation and maintenance data, an execution mechanism shown in FIG. 1b cannot prove whether the local service data is mixed into the operation and maintenance data. Therefore, the implementation of adding the audit system shown in FIG. 1b cannot effectively improve the trust of the user of the cloud service in the cloud service.

To resolve the foregoing problem, embodiments of this application provide a cloud data processing system and method, and a related device, so that data sent by a cloud site to a cloud platform meets a configuration requirement of a user of a cloud service provided by the cloud site, to improve trust of the user of the cloud service in the cloud service. The following describes in detail embodiments of this application with reference to the accompanying drawings.

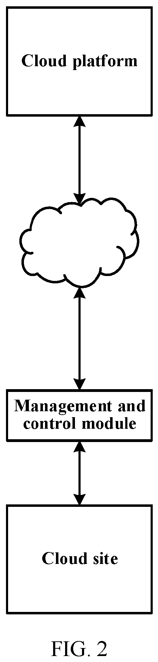

FIG. 2 is a diagram of an implementation of a cloud data processing system according to this application. The cloud data processing system includes a cloud platform, a management and control module, and a cloud site. The management and control module is configured to manage and control data sent by the cloud site to the cloud platform.

In a process in which the cloud site provides a cloud service, the cloud site generates first data that needs to be reported to the cloud platform, and the cloud site sends the first data to the management and control module.

The management and control module verifies the first data based on a first available data pool after receiving the first data that is from the cloud site and that needs to be reported to the cloud platform, and sends the first data to the cloud platform when determining that the first data passes the verification based on the first available data pool. The first available data pool is a data pool determined based on configuration information of a user of the cloud service provided by the cloud site.

After receiving the first data from the management and control module, the cloud platform stores the first data.

According to the technical solution shown in FIG. 2, in the process in which the cloud site in the cloud data processing system provides the cloud service, the first data sent by the cloud site to the cloud platform needs to be verified by the management and control module. In other words, the management and control module performs verification based on the first available data pool, and sends the first data to the cloud platform when the first data passes the verification. The first available data pool is the data pool determined based on the configuration information of the user of the cloud service provided by the cloud site. Therefore, in the process in which the cloud site provides the cloud service, the first data sent by the cloud site to the cloud platform is data that passes the verification of the management and control module, so that the data sent by the cloud site to the cloud platform meets a configuration requirement of the user of the cloud service provided by the cloud site, to improve trust of the user of the cloud service in the cloud service.

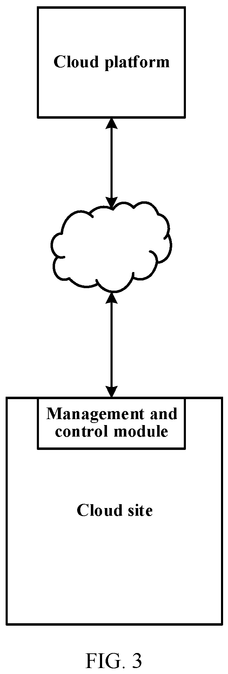

It should be understood that the cloud site may include one or more servers (or virtual machines, containers, or the like). As shown in FIG. 2, the management and control module may alternatively be independently disposed in a device other than the one or more servers (or the virtual machines, the containers, or the like). Alternatively, as shown in FIG. 3, the management and control module may be disposed in the one or more servers (or the virtual machines, the containers, or the like). This is not limited in this application. In addition, the management and control module is a module configured to manage and control the data sent by the cloud site to the cloud platform. The management and control module may alternatively have another name, for example, a server (or a virtual machine, a container, or the like) configured to provide a management and control service, a management and control server (or a management and control virtual machine, a management and control container, or the like), a network watch dog (network watch dog, NWD), or another name. In this application, only an example in which the name is a management and control module is used for description.

In a possible implementation, the management and control module is further configured to send first information to the cloud platform, where the first information includes the first available data pool and signature information of the management and control module for the first available data pool. The cloud platform is further configured to send second information to the management and control module, where the second information includes the first available data pool and signature information of the cloud platform for the first available data pool, or the second information includes the first available data pool and signature information of the cloud platform for the first information. The cloud platform is further configured to verify the first data based on the first available data pool, and store the first data after determining that the first data passes the verification based on the first available data pool. Specifically, the management and control module and the cloud platform may further exchange the signature information of the management and control module for the first available data pool and the signature information of the cloud platform for the first available data pool, so that both the management and control module and the cloud platform can obtain a first available data pool that passes dual authentication of the management and control module and the cloud platform. Therefore, for the management and control module, the management and control module may verify the data based on the first available data pool that passes the dual authentication, so that data sent by the management and control module to the cloud platform is valid data that passes authentication of the cloud platform, and the management and control module does not send invalid data to the cloud platform. Correspondingly, for the cloud platform, the cloud platform may verify the data based on the first available data pool that passes the dual authentication, so that data stored on the cloud platform is valid data that passes the authentication of the cloud platform, and the cloud platform does not store invalid data, to improve security of the data stored on the cloud platform.

In a possible implementation, the management and control module is further configured to send the first information to the cloud site, and the cloud site is further configured to generate the first data based on the first available data pool. Specifically, the management and control module may further send, to the cloud site, the first information that includes the first available data pool and the signature information of the management and control module for the first available data pool, so that the cloud site generates valid data based on the first available data pool that passes the authentication of the management and control module, and the cloud site does not generate and send invalid data, to simplify a subsequent operation of the management and control module.

In a possible implementation, the first data pool includes N groups of data, each of the N groups of data includes category information of available data and value information of the available data, and N is a positive integer. The management and control module is further configured to obtain a second available data pool including M groups of data, and determine the first available data pool in the M groups of data based on the configuration information. Each of the M groups of data includes category information of available data and value information of the available data, and M is a positive integer greater than or equal to N. Specifically, the management and control module may determine, based on the configuration information of the user of the cloud service provided by the cloud site, the first available data pool including the N groups of data from the second available data pool including the M groups of data, where M is the positive integer greater than or equal to N. Therefore, the user of the cloud service is supported in customizing, based on the configuration information, the first available data pool that is in the management and control module and that is for performing data verification, to ensure that data subsequently sent by the management and control module to the cloud platform meets a requirement of the customization.

Optionally, the second available data pool obtained by the management and control module is from the cloud platform, the second available data pool obtained by the management and control module is data written by an administrator into the management and control module, or the second available data pool is obtained by the management and control module in another manner. This is not limited herein.

It may be understood that the category information of the available data includes a category name of the available data, or the category information of the available data includes an index corresponding to the category name of the available data. Similarly, the value information of the available data may include a value range of the available data, or the value information of the available data includes an index corresponding to the value range of the available data.

In a possible implementation, the first available data pool further includes signature information corresponding to each of the N groups of data, and the signature information includes signature information of the management and control module for each group of data and/or signature information of the cloud platform for each group of data. The management and control module is further configured to: when a data sending mode is a non-direct connection mode, determine signature information corresponding to the first data in the first available data pool, and send the signature information corresponding to the first data to the cloud platform. Specifically, a data sending unit used by the management and control module to send data to the cloud platform may support the non-direct connection mode. In a non-direct connection module, the management and control module may determine the signature information corresponding to the first data in the first available data pool, and send the signature information corresponding to the first data to the cloud platform, so that the cloud platform verifies the received first data based on the signature information in the first available data pool, to avoid data tampering and improve security.

In a possible implementation, the management and control module is further configured to: when a data sending mode is a direct connection mode, send signature information of the management and control module for the first data to the cloud platform. Specifically, a data sending unit used by the management and control module to send data to the cloud platform may support the direct connection mode. In a direct connection module, the management and control module may send the signature information of the management and control module for the first data to the cloud platform, so that the cloud platform verifies the received first data based on the signature information of the management and control module, to avoid data tampering, improve security, and simplify operations of the management and control module and the cloud platform.

It may be understood that a requirement of the non-direct connection mode for data security is higher than a requirement of the direct connection mode for the data security. The non-direct connection mode may alternatively be replaced with another description, for example, a high security mode, a trust mode, or an enhanced verification mode. Similarly, the direct connection mode may alternatively be replaced with another description, for example, a low security mode or a non-trust mode.

In a possible implementation, the first available data pool further includes a sending policy, and the sending policy includes sending time and/or a sending sequence. The management and control module is further configured to send the first data to the cloud platform according to the sending policy. Specifically, the first available data pool determined based on the configuration information of the user of the cloud service provided by the cloud site may further include the sending policy, so that the management and control module can send the first data to the cloud platform according to the sending policy configured by the user, to further improve the trust of the user of the cloud service in the cloud service.

In a possible implementation, the system further includes an audit system. The management and control module is further configured to send the first data to the audit system, so that the audit system audits the first data. Specifically, the management and control module may further send the first data to the audit system, so that the user of the cloud service can perform, based on the audit system, audit (including real-time audit, post-event audit, or the like) on the first data sent by the management and control module to the cloud platform, to further improve the trust of the user of the cloud service in the cloud service.

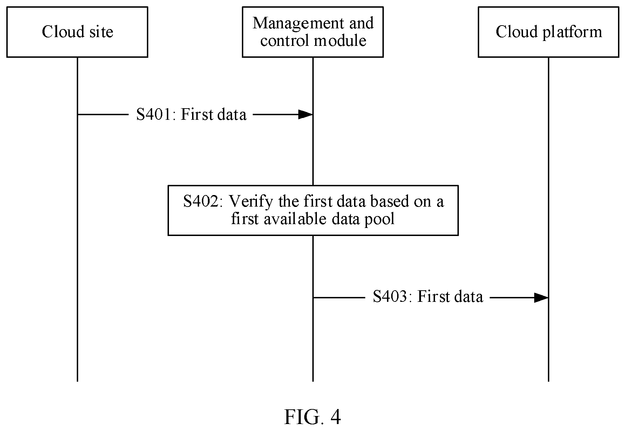

The foregoing describes the cloud data processing system provided in this application. The following describes a cloud data processing method provided in this application with reference to an implementation process shown in FIG. 4. FIG. 4 is a diagram of an implementation of a cloud data processing method according to this application. The method includes the following steps.

It should be noted that the method shown in FIG. 4 is applied to a system including a cloud platform, a management and control module, and a cloud site. In the method shown in FIG. 4, an example in which the cloud platform, the management and control module, and the cloud site are used as execution bodies of an interaction example is for illustrating the method. However, the execution bodies of the interaction example are not limited in this application. For example, the cloud platform (or the management and control module, or the cloud site) in FIG. 4 may alternatively be a chip, a chip system, or a processor that supports the cloud platform (or the management and control module, or the cloud site) in implementing the method, or may be a logical module or software that can implement all or a part of the cloud platform (or the management and control module, or the cloud site).

S401: The cloud site sends first data to the management and control module.

In this embodiment, in a process in which the cloud site provides a cloud service, the cloud site generates the first data, and the cloud site sends the first data to the management and control module in step S401.

S402: The management and control module verifies the first data based on a first available data pool.

In this embodiment, after receiving the first data in step S401, the management and control module verifies the first data based on the first available data pool in step S402.

S403: The management and control module sends the first data to the cloud platform.

In this embodiment, when the management and control module verifies the first data based on the first available data pool in step S402 and the verification is passed, the management and control module sends the first data to the cloud platform in step S403.

Specifically, in a cloud data processing system, the management and control module is configured to manage and control the data sent by the cloud site to the cloud platform. The management and control device verifies the first data based on the first available data pool in step S402 after receiving the first data from the cloud site in step S401, and sends the first data to the cloud platform when determining that the first data passes the verification based on the first available data pool in step S403. The first available data pool is a data pool determined based on configuration information of a user of the cloud service provided by the cloud site. Therefore, in the process in which the cloud site provides the cloud service, the first data sent by the cloud site to the cloud platform is data that passes the verification of the management and control module, so that the data sent by the cloud site to the cloud platform meets a configuration requirement of the user of the cloud service provided by the cloud site, to improve trust of the user of the cloud service in the cloud service.

It should be understood that the cloud site may include one or more servers (or virtual machines, containers, or the like), and the management and control module may be disposed in the one or more servers (or the virtual machines, the containers, or the like), or the management and control module may be independently disposed in a device other than the one or more servers (or the virtual machines, the containers, or the like). This is not limited in this application.

In a possible implementation, the first data pool includes N groups of data, each of the N groups of data includes category information of available data and value information of the available data, and N is a positive integer. Before the management and control module verifies the first data based on the first available data pool in step S402, the method further includes: The management and control module receives a second available data pool from the cloud platform, where the second available data pool includes M groups of data, each of the M groups of data includes category information of available data and value information of the available data, and M is a positive integer greater than or equal to N. The management and control module determines the first available data pool in the M groups of data based on the configuration information. Specifically, the management and control module may determine, based on the configuration information of the user of the cloud service provided by the cloud site, the first available data pool including the N groups of data from the second available data pool including the M groups of data, where M is the positive integer greater than or equal to N. Therefore, the user of the cloud service is supported in customizing, based on the configuration information, the first available data pool that is in the management and control module and that is for performing data verification, to ensure that data subsequently sent by the management and control module to the cloud platform meets a requirement of the customization.

In a possible implementation, the configuration information includes at least one of an available data deletion instruction and an available data modification instruction. Specifically, in an implementation in which the second available data pool obtained by the management and control module is from the cloud platform, the user of the cloud service may perform a customized operation such as deletion or modification, to ensure that the data subsequently sent by the management and control module to the cloud platform meets the requirement of the customized operation.

In a possible implementation, the first available data pool further includes a sending policy, and the sending policy includes sending time and/or a sending sequence. That the management and control module sends the first data to the cloud platform includes: The management and control module sends the first data to the cloud platform according to the sending policy. Specifically, the first available data pool determined based on the configuration information of the user of the cloud service provided by the cloud site may further include the sending policy, so that the management and control module can send the first data to the cloud platform according to the sending policy configured by the user, to further improve the trust of the user of the cloud service in the cloud service.

Optionally, in addition to being from the cloud platform as described above, the second available data pool obtained by the management and control module may alternatively be data written by an administrator into the management and control module, or the second available data pool is obtained by the management and control module in another manner. This is not limited herein.

It may be understood that the category information of the available data includes a category name of the available data, or the category information of the available data includes an index corresponding to the category name of the available data. Similarly, the value information of the available data may include a value range of the available data, or the value information of the available data includes an index corresponding to the value range of the available data.

In a possible implementation, before step S403, the method further includes: The management and control module sends first information to the cloud platform, where the first information includes the first available data pool and signature information of the management and control module for the first available data pool. The management and control module receives second information from the cloud platform, where the second information includes the first available data pool and signature information of the cloud platform for the first available data pool, or the second information includes the first available data pool and signature information of the cloud platform for the first information. Specifically, the management and control module and the cloud platform may further exchange the signature information of the management and control module for the first available data pool and the signature information of the cloud platform for the first available data pool, so that both the management and control module and the cloud platform can obtain a first available data pool that passes dual authentication of the management and control module and the cloud platform. Therefore, for the management and control module, the management and control module may verify the data based on the first available data pool that passes the dual authentication, so that data sent by the management and control module to the cloud platform is valid data that passes authentication of the cloud platform, and the management and control module does not send invalid data to the cloud platform. Correspondingly, for the cloud platform, the cloud platform may subsequently verify the data based on the first available data pool that passes the dual authentication, so that data stored on the cloud platform is valid data that passes the authentication of the cloud platform, and the cloud platform does not store invalid data, to improve security of the data stored on the cloud platform.

In a possible implementation, before step S403, the method further includes: The management and control module sends the first information to the cloud site, where the first information includes the first available data pool and the signature information of the management and control module for the first available data pool. Specifically, the management and control module may further send, to the cloud site, the first information that includes the first available data pool and the signature information of the management and control module for the first available data pool, so that the cloud site generates valid data based on the first available data pool that passes the authentication of the management and control module, and the cloud site does not generate and send invalid data, to simplify a subsequent operation of the management and control module.

In a possible implementation, when the management and control module determines, in step S402, that the first data passes the verification based on the first available data pool, the method further includes: The management and control module sends the first data to an audit system. Specifically, the management and control module may further send the first data to the audit system, so that the user of the cloud service can perform, based on the audit system, audit (including real-time audit, post-event audit, or the like) on the first data sent by the management and control module to the cloud platform, to further improve the trust of the user of the cloud service in the cloud service.

In a possible implementation, the first available data pool further includes signature information corresponding to each of the N groups of data, and the signature information includes signature information of the management and control module for each group of data and/or signature information of the cloud platform for each group of data. When it is determined that the first data passes the verification based on the first available data pool, the method further includes: When a data sending mode is a non-direct connection mode, the management and control module determines signature information corresponding to the first data based on the first available data pool, and sends the signature information corresponding to the first data to the cloud platform. Specifically, a data sending unit used by the management and control module to send data to the cloud platform may support the non-direct connection mode. In a non-direct connection module, the management and control module may determine the signature information corresponding to the first data in the first available data pool, and send the signature information corresponding to the first data to the cloud platform, so that the cloud platform verifies the received first data based on the signature information in the first available data pool, to avoid data tampering and improve security.

In a possible implementation, when it is determined that the first data passes the verification based on the first available data pool, the method further includes: When a data sending mode is a direct connection mode, the management and control module sends signature information of the management and control module for the first data to the cloud platform. Specifically, a data sending unit used by the management and control module to send data to the cloud platform may support the direct connection mode. In a direct connection module, the management and control module may send the signature information of the management and control module for the first data to the cloud platform, so that the cloud platform verifies the received first data based on the signature information of the management and control module, to avoid data tampering, improve security, and simplify operations of the management and control module and the cloud platform.

It may be understood that a requirement of the non-direct connection mode for data security is higher than a requirement of the direct connection mode for the data security. The non-direct connection mode may alternatively be replaced with another description, for example, a high security mode, a trust mode, or an enhanced verification mode. Similarly, the direct connection mode may alternatively be replaced with another description, for example, a low security mode or a non-trust mode.

In a possible implementation, before step S401, the method further includes: After receiving the first available data pool from the management and control module and generating the first data based on the first available data pool, the cloud site sends the first data to the management and control module. The first available data pool is the data pool determined based on the configuration information of the user of the cloud service provided by the cloud site. Therefore, in the process in which the cloud site provides the cloud service, the first data sent by the cloud site to the cloud platform is the data that passes the verification of the management and control module, so that the data sent by the cloud site to the cloud platform meets the configuration requirement of the user of the cloud service provided by the cloud site, to improve the trust of the user of the cloud service in the cloud service. In addition, the cloud site generates the valid data based on the first available data pool indicated by the management and control module, so that the cloud site does not generate and send the invalid data.

Optionally, the first information sent by the management and control module to the cloud site includes the signature information of the cloud platform for the first available data pool, and/or the first information sent by the management and control module to the cloud site includes the signature information of the management and control module for the first available data pool. Specifically, the first information received by the cloud site may further include the signature information of the cloud platform for the first available data pool, and/or the first information includes the signature information of the management and control module for the first available data pool, so that the cloud site generates the valid data based on the first available data pool that passes the authentication of the management and control module and/or the authentication of the cloud platform, and the cloud site does not generate and send the invalid data, to simplify a subsequent operation of the management and control module.

According to the technical solution shown in FIG. 4, in the cloud data processing system, the management and control module is configured to manage and control the data sent by the cloud site to the cloud platform. The cloud platform verifies the first data based on the first available data pool after receiving the first data from the management and control device, and stores the first data when determining that the first data passes the verification based on the first available data pool. The first available data pool is the data pool determined based on the configuration information of the user of the cloud service provided by the cloud site. Therefore, the first data stored on the cloud platform is data that passes the verification of the cloud platform, so that the data stored on the cloud platform meets the configuration requirement of the user of the cloud service provided by the cloud site, to improve the trust of the user of the cloud service in the cloud service. In addition, the data stored on the cloud platform is the valid data that passes the authentication of the cloud platform, so that the cloud platform does not store the invalid data, to improve the security of the data stored on the cloud platform.

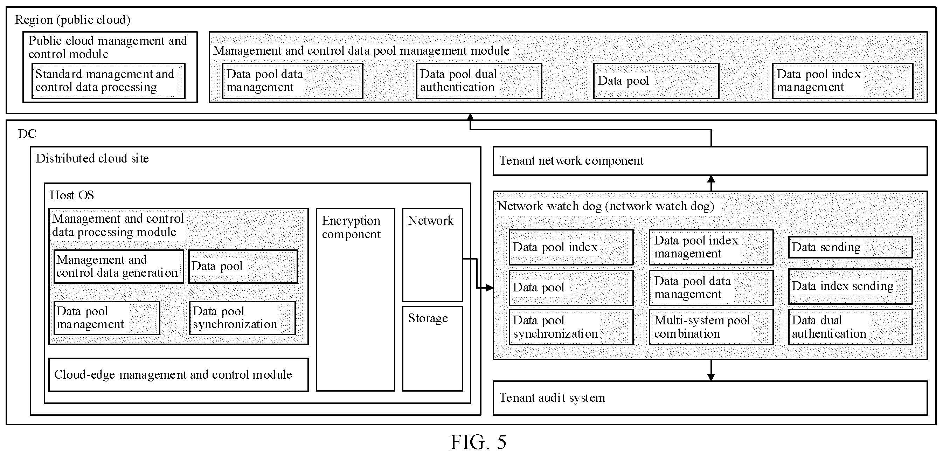

In an implementation example, the following uses an example shown in FIG. 5 in which a name of a management and control module is an NWD, a cloud platform is a public cloud (Region), and a cloud site is a distributed cloud site and is deployed in a data center (data center, DC) to describe an implementation process of the foregoing cloud data processing system. As shown in FIG. 5, the cloud data processing system includes the following implementation processes.

For the distributed cloud site in the cloud data processing system, a management and control data processing module is newly added, and is configured to obtain, from the NWD, a management and control data pool (namely, the first available data pool in the foregoing embodiment) defined by a tenant (the tenant may be a user of a cloud service provided by the distributed cloud site), and generate to-be-sent data (for example, the first data in the foregoing embodiment) based on the obtained management and control data pool. For example, components included in the distributed cloud site may perform implementation processes in the following Table 1.

**Table 1**

| System to which a component belongs | Module to which the component belongs | Component name | Component description | Component dependency |
|---|---|---|---|---|
| Distributed cloud site | Management and control data processing module | Data pool | Configured to store metadata of management and control data, where a source of the metadata is content obtained by tailoring, by a tenant, data content supported by a distributed cloud system | Distributed cloud site |
| | | Data pool management | Manages operations of import, export, addition, deletion, modification, and query of the metadata in the data pool | Data pool |
| | | Data pool synchronization | The distributed cloud site synchronizes a latest valid management and control data set from an NWD in real time or periodically, and updates the data pool based on synchronized content | Data pool |
| | | Management and control data generation | The management and control data processing module generates corresponding to-be-sent data based on original data locally generated in the distributed cloud site and the data pool | Data pool |

It may be understood that, in the implementation process of the data pool in Table 1, the metadata may be the first available data pool in the foregoing embodiment, and the data supported by the distributed cloud system may be the second available data pool in the foregoing embodiment.

Optionally, in the implementation process of the data pool in Table 1, a range of tailored content generally cannot be outside a data set supported by the distributed cloud system. If the range is outside the data set, approval needs to be performed separately in the region.

It may be understood that, in the implementation process of the data pool management in Table 1, the implementation process is mainly for updating a data change synchronized from the NWD. Generally, the distributed cloud site cannot actively change the metadata in the data pool.

It may be understood that, in the implementation process of data pool synchronization in Table 1, there may be a 1:N (N is a positive integer) relationship between the distributed cloud site and the NWD, and each distributed cloud site may be connected to the region at a same moment via one of N NWDs.

Optionally, in the implementation process of the management and control data generation in Table 1, the to-be-sent data may be the first data in the foregoing embodiment.

Optionally, during the management and control data generation, each piece of to-be-sent data may be signed, or not each piece of data needs to be signed, for example, a batch of data is signed.

Optionally, as shown in FIG. 5, the distributed cloud site may further include the following modules:
a cloud-edge management and control module, configured to receive an operation instruction of the cloud platform (or another device) by using a network module, and complete a related operation according to the operation instruction; and/or configured to send the generated management and control data to the NWD (or directly send the generated management and control data to the cloud platform) by using the network module;
an encryption component module, which may be provided by a cloud service provider or built by the tenant, configured to encrypt or decrypt data transmitted by the network module;
a network module, configured to receive and send data; and
a storage module, configured to store data.

The NWD in the cloud data processing system may be deployed inside an IT system of the tenant (or independently deployed outside the IT system of the tenant, where in the figure, an example in which the distributed cloud site and the NWD are co-deployed in the DC is used for description). Main functions of the NWD include: defining/managing a data set that can be sent, receiving data from the distributed cloud site and sending the data to an audit system, and completing data dual authentication with the region. For example, components included in the NWD may perform implementation processes in the following Table 2.

**Table 2**

| Home system | Home module | Component name | Component description | Component dependency |
|---|---|---|---|---|
| Tenant security system | NWD | Data pool | Configured to store metadata of management and control data, where a source of the metadata is content obtained by tailoring, by a tenant, data content supported by a distributed cloud system | Data dual authentication |
| | | Data pool index management | Needs to send a data index, where a data pool index is a part of a data pool; configured to index original data in the data pool; and exists as an element for interaction between a plurality of systems | Data pool |
| | | Data pool data management | Manages operations of import, export, addition, deletion, modification, and query of the management and control metadata in the data pool, and can support some customized data and attributes, which need to be authenticated by a region | Data pool |
| | | Data pool synchronization | Synchronizes data with another NWD to update the data pool, and supports a data synchronization request of a distributed cloud site | Data pool |
| | | Multi-system pool combination | Supports unified management and merging processing of data obtained from a plurality of regions, and supports unified management and merging processing of data synchronized from a plurality of NWDs | Data pool data management and data pool index management |
| | | Data sending | Sends data to the region, including forwarding original management and control data in the distributed cloud site, and also supports, on the NWD, forwarding of new data generated based on management and control data reported by the distributed cloud site | Data dual authentication |
| | | Data index sending | Sends the index to the region, and is used in a high-efficiency mode and a high-security mode in which no original data is sent between the NWD and the region, and only the data index is sent | Data dual authentication |
| | | Data dual authentication | Sends tailored or customized data to the region for dual authentication, where data that passes dual authentication of the region and the NWD may be securely and legally exchanged between the region and the NWD | |

It may be understood that, in the implementation process of the data pool in Table 2, the metadata may be the first available data pool in the foregoing embodiment, and the data supported by the distributed cloud system may be the second available data pool in the foregoing embodiment.

Optionally, in the implementation process of the data pool in Table 2, a range of tailored content generally cannot be outside a data set supported by the distributed cloud system. If the range is outside the data set, approval needs to be performed separately in the region.

For the region in the cloud data processing system, a standard management and control data processing module needs to be added to a currently existing public cloud management and control module in the region, for processing standardized management and control data. A management and control data pool management module is newly added to the region, and a main function of the module includes at least one of the following: data pool management, data dual authentication, data pool data query, and data pool indexing. For example, components included in the region may perform implementation processes in the following Table 3.

**Table 3**

| Home system | Home module | Component name | Component description | Component dependency |
|---|---|---|---|---|
| Region | Public cloud management and control module | Standard management and control data processing | Configured to be connected to a management and control data pool management module in the region, to obtain reported management and control data | Region: management and control data pool management module |
| | Management and control data pool management module | Data pool | Configured to store metadata of management and control data, where a source of the metadata is content obtained by tailoring, by a tenant, data content supported by a distributed cloud system | Distributed cloud site |
| | | Data pool data management | Manages operations of import, export, addition, deletion, modification, and query of the management and control metadata in the data pool, and can support some customized data and attributes, which need to be authenticated by the region | Data pool |
| | | Data pool index management | Ensures that an index is unique globally in the region, same data has a globally unique index, and only different data has different index values between different NWDs; and needs to update the index (an index value of existing data may not be changed) after the metadata in the data pool is changed | Data pool |
| | | Data pool dual authentication | Sends data to the region for dual authentication after tailoring and customization of a management and control data set in the distributed cloud site is completed by an NWD system of a user, and generates an index after the authentication is passed, where the two parties may exchange management and control data based on data content and the index (the NWD forwards information obtained from the distributed cloud site) | Data pool, data pool index, data pool management, data pool, and data customization |

It may be understood that, in the implementation process of the data pool in Table 3, the metadata may be the first available data pool in the foregoing embodiment, and the data supported by the distributed cloud system may be the second available data pool in the foregoing embodiment.

Optionally, in the implementation process of the data pool in Table 3, a range of tailored content generally cannot be outside a data set supported by the distributed cloud system. If the range is outside the data set, approval needs to be performed separately in the region.

It can be learned from the components shown in Table 1 to Table 3 that at least one of the following interaction processes may be performed between the components.
1. Between the region, the NWD, and the distributed cloud site
   Specifically, a standard interaction protocol is defined for interaction between the region, the NWD, and the DC, to complete content interaction and authentication of a legal management and control data pool.
2. Between the region and the NWD Specifically, management and control data (a type, a name, or content) imported or configured on the NWD needs to be confirmed on the region, to ensure that no invalid data is sent from the NWD to the region.
   Optionally, there is a many-to-many relationship between the region and the NWD, but the metadata (unique: a name of the management and control data or unique: a name and content of the management and control data) of the management and control data on the region and the NWD is unique. In addition, an efficient interaction process may alternatively be implemented between the NWD and the region by using the data index.
3. Between the distributed cloud site and the NWD Specifically, both the distributed cloud site and the NWD belong to a tenant service system, and interaction is completed via a tenant intranet. In addition, the distributed cloud site obtains a valid management and control data pool from the NWD to generate the to-be-sent management and control data.
   Optionally, the NWD may support a bypass mode, and directly forward the management and control data on the distributed cloud site to the public cloud (real-time audit may be performed simultaneously) on the premise that a management and control plane system of the distributed cloud site is trusted.
4. Between the NWD and the audit system Specifically, data on the NWD is either data generated by the NWD based on the management and control data pool or standard data that can be identified by the NWD. Before being sent, the data needs to be sent to the audit system for real-time and post-event audit.
5. Between the NWD and another security component of the tenant Specifically, the NWD may support, through permission management, that only a specific user can perform NWD setting, or may perform SSO connection with another permission management system.
6. Between the distributed cloud site and the region Specifically, there is no directly connected management and control channel between the distributed cloud site and the region, and all data can reach the region only after being processed by the NWD.

Optionally, identity authentication may be performed between the NWD and the distributed cloud site and between the NWD and the cloud platform. A conventional certificate mechanism is used as an authentication mechanism, and this part of authentication procedure is a standard certificate authentication procedure. Authentication and encryption/decryption are a channel establishment process, and may be understood as pre-processing of the foregoing embodiment. In addition, in the foregoing embodiment, the focus is on the data exchange and authentication, while for establishment of an authentication and encryption channel of interaction entities, standard procedures and techniques in the art may be used.

The following describes an execution procedure of each module shown in FIG. 5 with reference to more accompanying drawings by using examples.

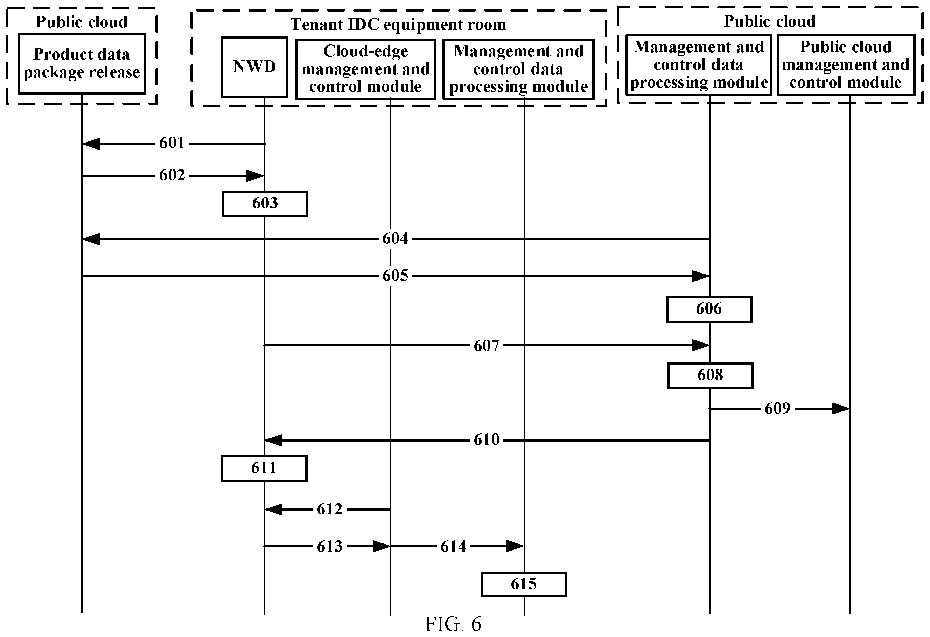

An implementation example shown in FIG. 6 is an implementation example of the foregoing "dual authentication".

In the example shown in FIG. 6, a public cloud may further include a product data package release module. The product data package release module, a management and control data processing module, and a public cloud management and control module in the public cloud, and an NWD, a cloud-edge management and control module, and a management and control data processing module that are included in a tenant internet data center (internet data center, IDC) equipment room may perform an implementation process shown in FIG. 6.

601: The NWD requests a standard data pool from the product data package release module.

It may be understood that the standard data pool in this embodiment is the second available data pool in the foregoing embodiment.

602: The product data package release module sends the standard data pool to the NWD.

603: A user of a cloud service may customize the standard data pool and generate a data signature by using the NWDNWD, to obtain a first available data pool.

604: The management and control data processing module in the public cloud requests the standard data pool from the product data package release module.

605: The product data package release module sends the standard data pool to the management and control data processing module in the public cloud.

606: The management and control data processing module in the public cloud updates a local data pool, and generates an index of available data (including a category and/or a value).

607: The NWD sends the first available data pool obtained in step S603 to the management and control data processing module in the public cloud.

608: The management and control data processing module in the public cloud signs the first available data pool received in step 607, and updates the index.

609: The management and control data processing module in the public cloud sends a signed first available data pool in step S608 to the public cloud management and control module through internal interaction.

Optionally, the public cloud management and control module performs local queue refreshing after step 609, to specify that the NWD has performed processing based on the standard data pool to obtain the first available data pool.

610: The management and control data processing module in the public cloud sends the first available data pool including dual signatures and an updated index to the NWD.

611: The NWD updates, based on data received in step 610, the first available data pool locally obtained in step 603.

612: The cloud-edge management and control module (periodically or cyclically) sends a synchronization request of an available data pool to the NWD.

613 and 614: The NWD separately sends a first available data pool updated in step 611 to the cloud-edge management and control module and the management and control data processing module in the tenant IDC equipment room.

615: The management and control data processing module in the tenant IDC equipment room records the updated first available data pool.

It can be learned from the implementation process shown in FIG. 6 that a standard data source is needed during data initialization, and the source may be a standard data package released by a cloud platform vendor (that is, the cloud platform including the product data package release module in FIG. 6, for indicating that a cloud platform service provider delivers a standard data source field of a system of the cloud platform service provider in an initialization process, and the cloud platform and a management module that needs to obtain management and control data to manage cloud software in the tenant equipment room in a normal service process in a dashed box on the right of the figure are modules of the same cloud service provider, and are separately drawn in FIG. 6 to show that one module is responsible for releasing the standard data source, and the other module is a data management module for managing the software in the tenant equipment room after a user deploys the software in the IDC equipment room and a cloud platform service, where the two modules are different). In step 603, the tenant performs tailoring and customization on the released data package, where the tailoring can reduce data content, and the customization can modify some field content. Via the procedure shown in FIG. 6, transparency of cloud-edge interaction can be ensured, to ensure that local data residency of the tenant can be proved.

Optionally, by default, the tenant does not need to tailor or customize the data package.

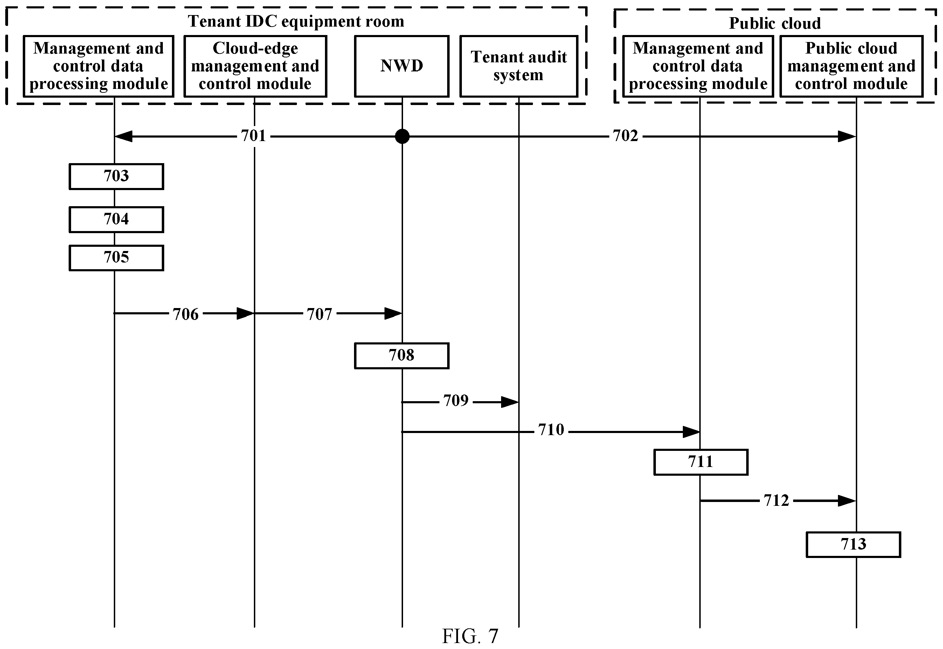

An implementation example shown in FIG. 7 is an implementation example of a receiving and sending process of the foregoing "first data".

In the example shown in FIG. 7, a tenant IDC equipment room includes a management and control data processing module, a cloud-edge management and control module, an NWD, and a tenant audit system, and a public cloud includes a management and control data processing module and a public cloud management and control module. An implementation of each module is shown in the following steps.

701: The NWD sends configuration information of an interaction mode to the management and control data processing module in the tenant IDC equipment room.

It may be understood that the interaction mode in this embodiment includes a data text transmission mode, a data index transmission mode, a direct connection mode, a non-direct connection mode, and the like.

702: The NWD sends the configuration information of the interaction mode to the public cloud management and control module in the public cloud. The configuration information of the interaction mode may be set by a user of a cloud service.

703: The management and control data processing module in the tenant IDC equipment room sets a data reporting mode based on the configuration information received in step 701.

704: The management and control data processing module in the tenant IDC equipment room generates to-be-sent data, where the to-be-sent data may be the first data in the foregoing embodiment.

705: The management and control data processing module in the tenant IDC equipment room processes, based on the data reporting mode set in step 703, the first data generated in step 704, to obtain a data package.

706: The management and control data processing module in the tenant IDC equipment room sends the data package obtained in step 705 to the cloud-edge management and control module.

707: The cloud-edge management and control module sends the data package received in step 706 to the NWD.

708: The NWD verifies, based on a first available data pool, the data package received in step 707.

709: When the verification in step 708 is passed, the NWD sends the data package to the tenant audit system.

710: When the verification in step 708 is passed, the NWD sends the data package to the management and control data processing module in the public cloud.

711: The management and control data processing module in the public cloud verifies, based on the first available data pool, the data package received in step 710.

712: When the verification in step 711 is passed, the management and control data processing module in the public cloud sends the data package to the public cloud management and control module.

713: The public cloud management and control module stores and displays the data package.

It can be learned from the example shown in FIG. 7 that a tenant may select, based on a configuration of the tenant, an interaction mode in which data is sent from a distributed cloud site to a cloud platform, and legal compliance of the sent data is proved by using the audit system. The tenant is a user of the cloud service, and the implementation process can improve trust of the user of the cloud service in the used cloud service.

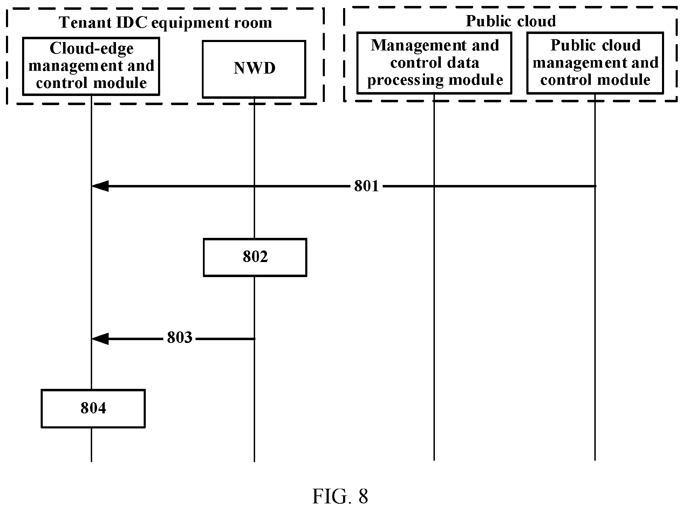

In an implementation example shown in FIG. 8, an update process may be further performed after the foregoing first available data pool is determined.

In the implementation example shown in FIG. 8, a tenant IDC equipment room includes a cloud-edge management and control module and an NWD, and a public cloud includes a management and control data processing module and a public cloud management and control module. An implementation of each module is shown in the following steps.

801: The public cloud management and control module sends an upgrade data package to the NWD, where the upgrade data package includes update information for a first available data pool.

802: A user of a cloud service may verify the upgrade data package by using the NWD.

803: When the verification in step 802 is passed, the NWD sends the upgrade data package to the cloud-edge management and control module.

804: The cloud-edge management and control module manages and controls local data based on the upgrade data package.

It can be learned from the implementation example shown in FIG. 8 that, data delivered by a management and control plane is generally an upgrade package and a configuration adjustment command of a system, and a delivery process does not relate to a residency status change of tenant data. Therefore, when efficiency is considered, there is no need to deconstruct all data and convert the data into identifiers, to improve data exchange efficiency.

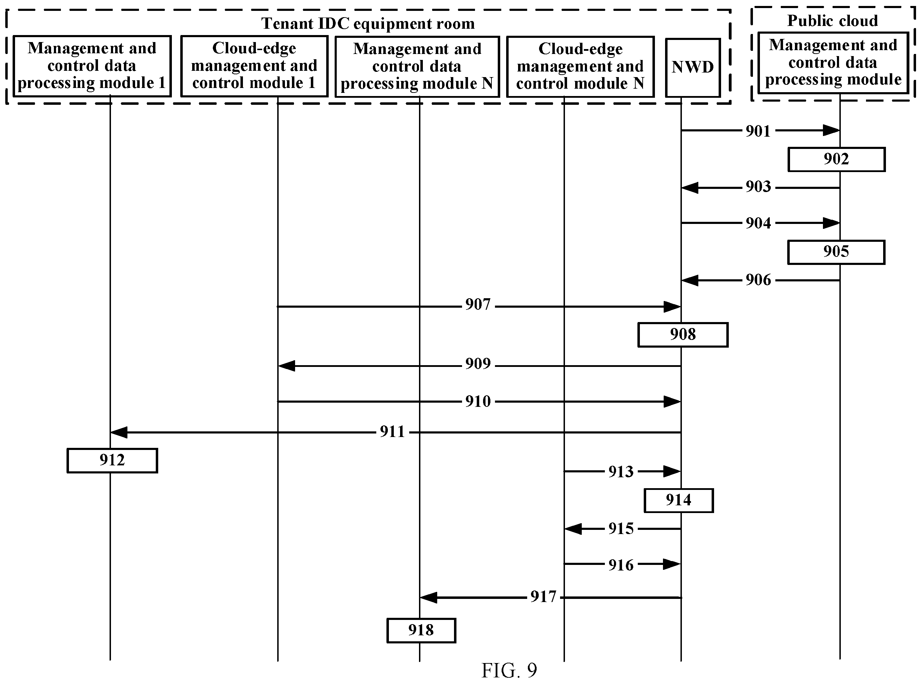

In a possible implementation, in the example shown in FIG. 5, a quantity relationship between the distributed cloud site and the NWD may be 1:1, or may be many:1. The following describes an implementation process of the latter by using an example shown in FIG. 9.

An implementation example shown in FIG. 9 is an implementation process of interaction between N (N is an integer greater than or equal to 2) cloud sites and a same NWD. In other words, one NWD may be maintained and shared by a plurality of cloud sites.

In the implementation example shown in FIG. 9, a tenant IDC equipment room includes a management and control data processing module 1, a cloud-edge management and control module 1, a management and control data processing module N, a cloud-edge management and control module N, and an NWD. A public cloud includes a management and control data processing module. An implementation of each module is shown in the following steps.

901: The NWD sends a connection authentication request message to the management and control data processing module in the public cloud.

Optionally, the connection authentication request message in this embodiment may include a certificate of the NWD, user account information, and the like.

902: The management and control data processing module in the public cloud authenticates the connection authentication request message received in step 901.

903: The management and control data processing module in the public cloud feeds back an authentication result to the NWD.

Optionally, in this embodiment, an example in which the authentication result in step 903 is that the authentication is passed is used for description.

904: The NWD sends a request for a data pool to the management and control data processing module in the public cloud.

905: The management and control data processing module in the public cloud authenticates the request for the data pool received in step 904.

906: When the authentication in step 905 is passed, the management and control data processing module in the public cloud sends a first available data pool including dual signatures to the NWD.

907: The cloud-edge management and control module 1 sends a connection authentication request message to the NWD.

908: The NWD authenticates the connection authentication request message received in step 907.

909: The NWD sends an authentication result to the cloud-edge management and control module 1.

Optionally, in this embodiment, an example in which the authentication result in step 909 is that the authentication is passed is used for description.

910: The cloud-edge management and control module 1 sends a request for a data pool to the NWD.

911: The NWD sends the first available data pool received in step 906 to the cloud-edge management and control module 1, so that the cloud-edge management and control module 1 forwards the first available data pool to the management and control data processing module 1.

912: The management and control data processing module 1 updates a local data pool based on the first available data pool received in step 911.

913: The cloud-edge management and control module N sends a connection authentication request message to the NWD.

914: The NWD authenticates the connection authentication request message received in step 913.

915: The NWD sends an authentication result to the cloud-edge management and control module N.

Optionally, in this embodiment, an example in which the authentication result in step 915 is that the authentication is passed is used for description.

916: The cloud-edge management and control module N sends a request for a data pool to the NWD.

917: The NWD sends the first available data pool received in step 906 to the cloud-edge management and control module N, so that the cloud-edge management and control module N forwards the first available data pool to the management and control data processing module N.

918: The management and control data processing module N updates a local data pool based on the first available data pool received in step 917.

It can be learned from the implementation example shown in FIG. 9 that the same NWD may be configured for the N cloud sites, so that one NWD can maintain available data shared by the plurality of cloud sites, to reduce NWD configurations and reduce implementation complexity of the solution.

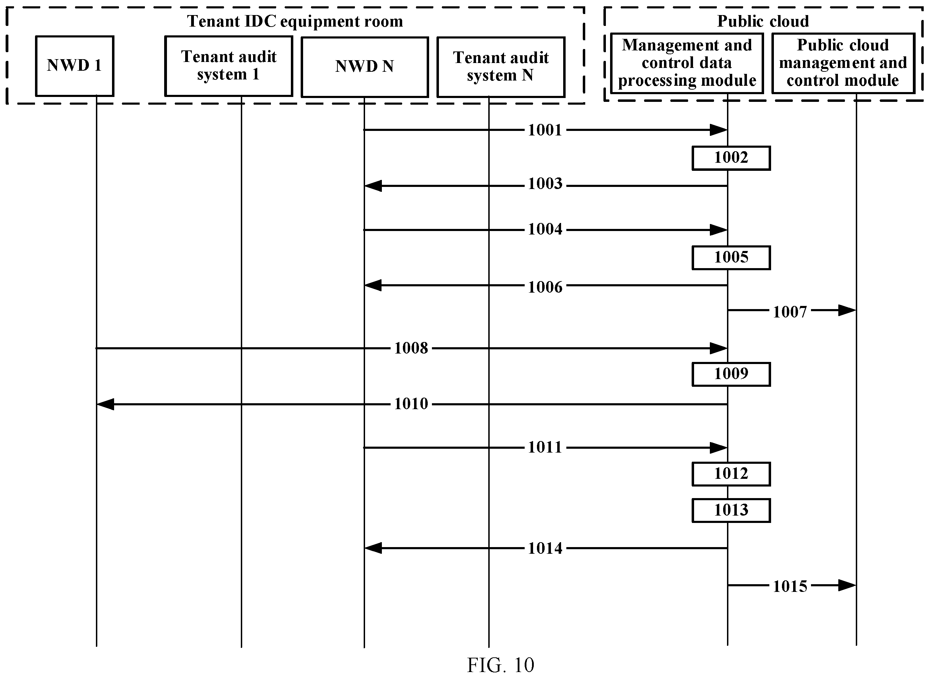

In a possible implementation, in the example shown in FIG. 5, a quantity relationship between the NWD and the public cloud may be 1:1, or may be many: 1. The following describes an implementation process of the latter by using an example shown in FIG. 10.

An implementation example shown in FIG. 10 is an implementation process of interaction between N (N is an integer greater than or equal to 2) NWDs and a public cloud. In other words, the public cloud may configure the N NWDs in one cloud site.

In the implementation example shown in FIG. 10, a tenant IDC equipment room includes an NWD 1, a tenant audit system 1, an NWD N, and a tenant audit system N, and the public cloud includes a management and control data processing module and a public cloud management and control module. An implementation of each module is shown in the following steps.

1001: The NWD N sends a connection authentication request message to the management and control data processing module in the public cloud.

Optionally, the connection authentication request message in this embodiment may include a certificate of the NWD, user account information, and the like.

1002: The management and control data processing module in the public cloud authenticates the connection authentication request message received in step 1001.

1003: The management and control data processing module in the public cloud feeds back an authentication result to the NWD N.

Optionally, in this embodiment, an example in which the authentication result in step 1003 is that the authentication is passed is used for description.

1004: The NWD N sends an available data pool on which local signature is performed to the management and control data processing module in the public cloud.

1005. The management and control data processing module in the public cloud authenticates the available data pool received in step 1004.

1006: When the authentication in step 1005 is passed, the management and control data processing module in the public cloud sends an available data pool including dual signatures (for example, the available data pool including the dual signatures may be the first available data pool in the foregoing embodiment) to the NWD N.

1007: The management and control data processing module in the public cloud sends the available data pool including the dual signatures to the public cloud management and control module.

Optionally, the public cloud management and control module performs local queue refreshing after step 1007, to specify that the NWD N has used the available data pool including the dual signatures.

1008: The NWD 1 sends a connection authentication request message to the management and control data processing module in the public cloud.

1009: The management and control data processing module in the public cloud authenticates the connection authentication request message received in step 1008.

1010: The management and control data processing module in the public cloud feeds back an authentication result to the NWD 1.

Optionally, in this embodiment, an example in which the authentication result in step 1009 is that the authentication is passed is used for description.

1011. The NWD 1 sends an available data pool on which local signature is performed to the management and control data processing module in the public cloud.

1012. The management and control data processing module in the public cloud authenticates the available data pool received in step 1004.

1013: When the authentication in step 1012 is passed, the management and control data processing module in the public cloud merges indexes (including data categories and/or data values) of available data included in available data pools of a plurality of NWDs.

1014: When the authentication in step 1012 is passed, the management and control data processing module in the public cloud sends an available data pool including dual signatures (for example, the available data pool including the dual signatures may be the first available data pool in the foregoing embodiment) to the NWD 1.

1015: The management and control data processing module in the public cloud sends the available data pool including the dual signatures to the public cloud management and control module.

Optionally, the public cloud management and control module performs local queue refreshing after step 1015, to specify that the NWD N has used the available data pool including the dual signatures.

It can be learned from the implementation example shown in FIG. 10 that a plurality of NWDs may be configured in a same tenant IDC equipment room, so that available data in a same cloud site can be maintained by using the plurality of NWDs, to facilitate flexible deployment of the solution.

The foregoing describes this application from perspectives of a system and a method. The following describes, based on more accompanying drawings, a management and control module, a cloud platform, and a cloud site that are provided in this application.

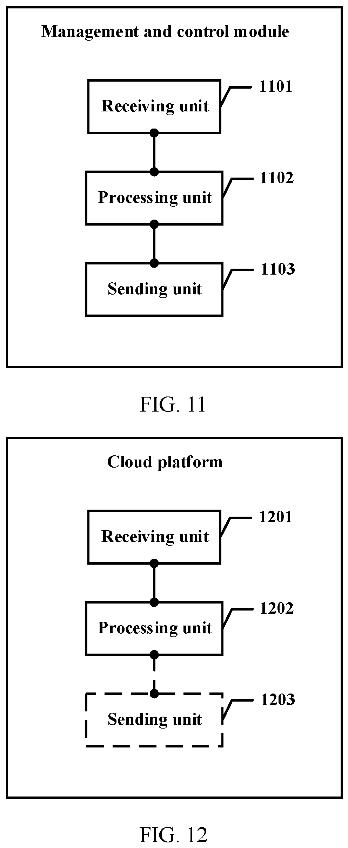

FIG. 11 is a diagram of an implementation of a management and control module according to this application. The management and control module includes a receiving unit 1101, a processing unit 1102, and a sending unit 1103. The receiving unit 1101 is configured to receive first data from a cloud site, where the management and control module is configured to manage and control data sent by the cloud site to a cloud platform. The processing unit 1102 is configured to verify the first data based on a first available data pool, where the first available data pool is a data pool determined based on configuration information of a user of a cloud service provided by the cloud site. The sending unit 1103 is configured to send the first data to the cloud platform when the processing unit 1102 determines that the first data passes the verification on the first available data pool.

In a possible implementation, the first data pool includes N groups of data, each of the N groups of data includes category information of available data and value information of the available data, and N is a positive integer. The receiving unit 1101 is further configured to receive a second available data pool from the cloud platform, where the second available data pool includes M groups of data, each of the M groups of data includes category information of available data and value information of the available data, and M is a positive integer greater than or equal to N. The processing unit 1102 is further configured to determine the first available data pool in the M groups of data based on the configuration information. The sending unit 1103 is further configured to send first information to the cloud platform, where the first information includes the first available data pool and signature information of the management and control module for the first available data pool.

In a possible implementation, the sending unit 1103 is further configured to send first information to the cloud platform, where the first information includes the first available data pool and signature information of the management and control module for the first available data pool. The receiving unit 1101 is further configured to receive second information from the cloud platform, where the second information includes the first available data pool and signature information of the cloud platform for the first available data pool, or the second information includes the first available data pool and signature information of the cloud platform for the first information.

In a possible implementation, the configuration information includes at least one of an available data deletion instruction and an available data modification instruction.

In a possible implementation, the sending unit 1103 is further configured to send the first data to an audit system.

It should be noted that, because content such as information exchange between and an implementation process of the units of the management and control module is based on the same concept as the method embodiments of this application, the technical effects brought by the content are the same as those of the method embodiments of this application. For specific content, refer to the descriptions in the method embodiments of this application. Details are not described herein again.

FIG. 12 is a diagram of an implementation of a cloud platform according to this application. The cloud platform includes a receiving unit 1201 and a processing unit 1202. The receiving unit 1201 is configured to receive first data from a management and control module. The processing unit is configured to verify the first data based on a first available data pool, where the first available data pool is a data pool determined based on configuration information of a user of a cloud service provided by a cloud site. The processing unit 1202 is further configured to store the first data when determining that the first data passes the verification based on the first available data pool.

In a possible implementation, the cloud platform further includes a sending unit 1203. The sending unit is configured to send a second available data pool to the management and control module, where the second available data pool includes M groups of data, each of the M groups of data includes category information of available data and value information of the available data, and M is a positive integer greater than or equal to N.

It should be noted that, because content such as information exchange between and an implementation process of the units of the cloud platform is based on the same concept as the method embodiments of this application, the technical effects brought by the content are the same as those of the method embodiments of this application. For specific content, refer to the descriptions in the method embodiments of this application. Details are not described herein again.

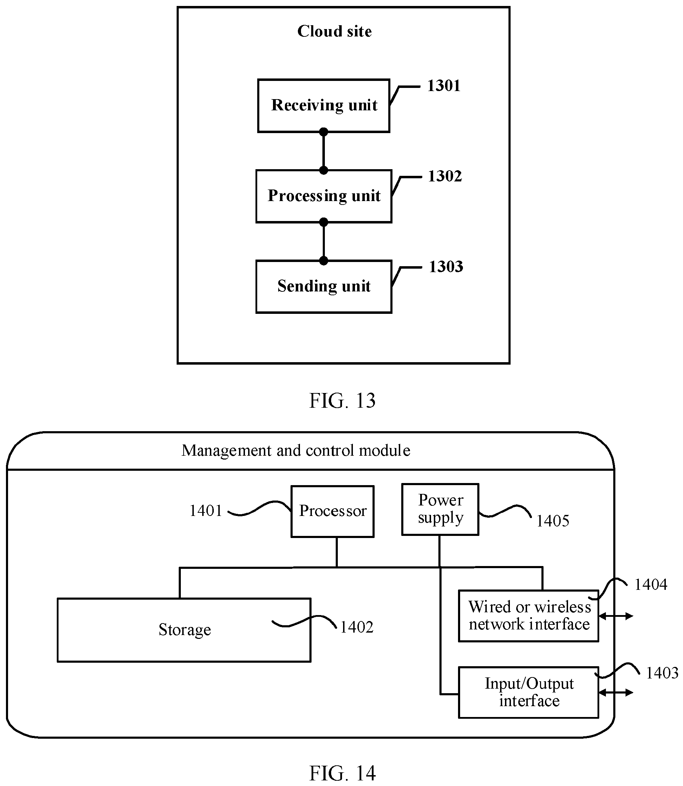

FIG. 13 is a diagram of an implementation of a cloud site according to this application. The cloud site includes a receiving unit 1301, a processing unit 1302, and a sending unit 1303. The receiving unit 1301 is configured to receive first information from a management and control module, where the first information includes a first available data pool, and the first available data pool is a data pool determined based on configuration information of a user of a cloud service provided by the cloud site. The processing unit 1302 is configured to generate first data based on the first available data pool. The sending unit 1303 is configured to send the first data to the management and control module.

It should be noted that, because content such as information exchange between and an implementation process of the units of the cloud site is based on the same concept as the method embodiments of this application, the technical effects brought by the content are the same as those of the method embodiments of this application. For specific content, refer to the descriptions in the method embodiments of this application. Details are not described herein again.

FIG. 14 is a diagram of another structure of a management and control module according to an embodiment of this application. As shown in FIG. 14, an embodiment of the management and control module may include one or more processors 1401, a storage 1402, an input/output interface 1403, a wired or wireless network interface 1404, and a power supply 1405.

The storage 1402 may be a transient storage or persistent storage. Further, the processor 1401 may be configured to communicate with the storage 1402, and perform, on the management and control module, a series of instruction operations in the storage 1402.

In this embodiment, the processor 1401 may perform an operation performed by the management and control module in any one of the foregoing embodiments. Details are not described herein again.

In this embodiment, specific functional module division in the processor 1401 may be similar to division of units such as the receiving unit, the processing unit, and the sending unit described in FIG. 7. Details are not described herein again.

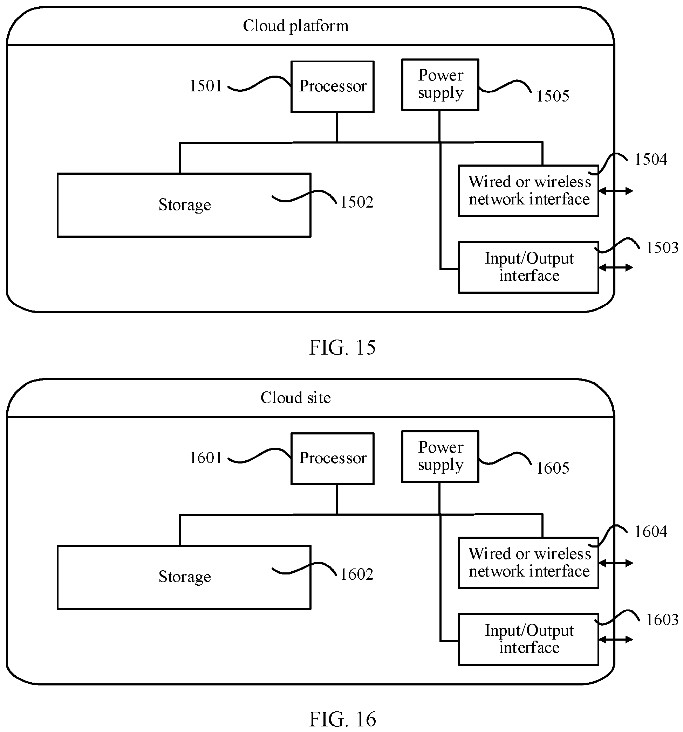

FIG. 15 is a diagram of another structure of a cloud platform according to an embodiment of this application. As shown in FIG. 15, an embodiment of the cloud platform may include one or more processors 1501, a storage 1502, an input/output interface 1503, a wired or wireless network interface 1504, and a power supply 1505.

The storage 1502 may be a transient storage or persistent storage. Further, the processor 1501 may be configured to communicate with the storage 1502, and perform, on the cloud platform, a series of instruction operations in the storage 1502.

In this embodiment, the processor 1501 may perform an operation performed by the cloud platform in any one of the foregoing embodiments. Details are not described herein again.

In this embodiment, specific functional module division in the processor 1501 may be similar to division of units such as the receiving unit, the processing unit, and the sending unit described in FIG. 7. Details are not described herein again.

FIG. 16 is a diagram of another structure of a cloud site according to an embodiment of this application. As shown in FIG. 16, an embodiment of the cloud site may include one or more processors 1601, a storage 1602, an input/output interface 1603, a wired or wireless network interface 1604, and a power supply 1605.

The storage 1602 may be a transient storage or persistent storage. Further, the processor 1601 may be configured to communicate with the storage 1602, and perform, on the cloud site, a series of instruction operations in the storage 1602.

In this embodiment, the processor 1601 may perform an operation performed by the cloud site in any one of the foregoing embodiments. Details are not described herein again.

In this embodiment, specific functional module division in the processor 1601 may be similar to division of units such as the receiving unit, the processing unit, and the sending unit described in FIG. 7. Details are not described herein again.

An embodiment of this application further relates to a computer storage medium, including computer-readable instructions. When the computer-readable instructions are executed, a computer is enabled to implement the steps performed by the management and control module in any one of the foregoing embodiments, a computer is enabled to implement the steps performed by the cloud platform in any one of the foregoing embodiments, or a computer is enabled to implement the steps performed by the cloud site in any one of the foregoing embodiments.

An embodiment of this application further relates to a computer program product including instructions. When the computer program product runs on a computer, the computer is enabled to implement the steps performed by the management and control module in any one of the foregoing embodiments, the computer is enabled to implement the steps performed by the cloud platform in any one of the foregoing embodiments, or the computer is enabled to implement the steps performed by the cloud site in any one of the foregoing embodiments.

It may be clearly understood by a person skilled in the art that, for the purpose of convenient and brief description, for specific working processes of the foregoing systems, apparatuses, and units, refer to corresponding processes in the foregoing method embodiments. Details are not described herein again.

In several embodiments provided in this application, it should be understood that the disclosed systems, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may or may not be physically separate, and parts displayed as units may or may not be physical units, in other words, may be located in one position, or may be distributed on a plurality of network units. Some or all of the units may be selected based on an actual requirement to achieve the objectives of the solutions in embodiments.

In addition, functional units in embodiments of this application may be integrated into one processing unit, or each unit may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes media such as a USB flash drive, a removable hard disk, a read-only memory (read-only memory, ROM), a random access memory (random access memory, RAM), a magnetic disk, an optical disc, or the like, that can store program code.

## Claims

1. A cloud data processing system, comprising a cloud site (1301-1303), a cloud platform (1201-1203), and a management and control module (1101-1103), wherein the management and control module (1101-1103) is configured to manage and control data sent by the cloud site (1301-1303) to the cloud platform (1201-1203);
the cloud site (1301-1303) is configured to generate first data, and send the first data to the management and control module (1101-1103);
the management and control module (1101-1103) is configured to verify the first data based on a first available data pool, and send the first data to the cloud platform (1201-1203) when determining that the first data passes the verification based on the first available data pool, wherein the first available data pool is a data pool determined based on configuration information of a user of a cloud service provided by the cloud site (1301-1303); and
the cloud platform (1201-1203) is configured to store the first data,
wherein the first data pool comprises N groups of data, each of the N groups of data comprises category information of available data and value information of the available data, and N is a positive integer; and
the management and control module (1101-1103) is further configured to obtain , from the cloud platform, a second available data pool comprising M groups of data, and determine the first available data pool in the M groups of data based on the configuration information, wherein each of the M groups of data comprises category information of available data and value information of the available data, and M is a positive integer greater than or equal to N.

2. The system according to claim 1, wherein
the management and control module (1101-1103) is further configured to send first information to the cloud platform (1201-1203), wherein the first information comprises the first available data pool and signature information of the management and control module (1101-1103) for the first available data pool;
the cloud platform (1201-1203) is further configured to send second information to the management and control module (1101-1103), wherein the second information comprises the first available data pool and signature information of the cloud platform (1201-1203) for the first available data pool, or the second information comprises the first available data pool and signature information of the cloud platform (1201-1203) for the first information; and
the cloud platform (1201-1203) is further configured to verify the first data based on the first available data pool, and store the first data after determining that the first data passes the verification based on the first available data pool.

3. The system according to claim 2, wherein
the management and control module (1101-1103) is further configured to send the first information to the cloud site (1301-1303); and
the cloud site (1301-1303) is further configured to generate the first data based on the first available data pool.

4. The system according to any one of claims 1 to 3, wherein the first available data pool further comprises signature information corresponding to each of the N groups of data, and the signature information comprises signature information of the management and control module (1101-1103) for each group of data and/or signature information of the cloud platform (1201-1203) for each group of data; and
the management and control module (1101-1103) is further configured to: when a data sending mode is a non-direct connection mode, determine signature information corresponding to the first data in the first available data pool, and send the signature information corresponding to the first data to the cloud platform (1201-1203).

5. The system according to any one of claims 1 to 3, wherein
the management and control module (1101-1103) is further configured to: when a data sending mode is a direct connection mode, send signature information of the management and control module (1101-1103) for the first data to the cloud platform (1201-1203).

6. The system according to any one of claims 1 to 5, wherein the first available data pool further comprises a sending policy, and the sending policy comprises sending time and/or a sending sequence; and
the management and control module (1101-1103) is further configured to send the first data to the cloud platform (1201-1203) according to the sending (S403) policy.

7. The system according to any one of claims 1 to 6, wherein the system further comprises an audit system; and
the management and control module (1101-1103) is further configured to send the first data to the audit system (optional), to enable the audit system (optional) to audit the first data.

8. A cloud data processing method based on a management and control module (1101-1103), comprising:
receiving (S401), by the management and control module (1101-1103), first data from a cloud site (1301-1303), wherein the management and control module (1101-1103) is configured to manage and control data sent by the cloud site (1301-1303) to a cloud platform (1201-1203);
verifying (S402), by the management and control module (1101-1103), the first data based on a first available data pool, wherein the first available data pool is a data pool determined based on configuration information of a user of a cloud service provided by the cloud site (1301-1303); and
sending (S403), by the management and control module (1101-1103), the first data to the cloud platform (1201-1203) when determining that the first data passes the verification based on the first available data pool,
wherein the first data pool comprises N groups of data, each of the N groups of data comprises category information of available data and value information of the available data, and N is a positive integer; and
before the verifying (S402), by the management and control module (1101-1103), the first data based on a first available data pool, the method further comprises:
receiving, by the management and control module (1101-1103), a second available data pool from the cloud platform (1201-1203), wherein the second available data pool comprises M groups of data, each of the M groups of data comprises category information of available data and value information of the available data, and M is a positive integer greater than or equal to N; and
determining, by the management and control module (1101-1103), the first available data pool in the M groups of data based on the configuration information.

9. The method according to claim 8, wherein the method further comprises:
sending, by the management and control module (1101-1103), first information to the cloud platform (1201-1203), wherein the first information comprises the first available data pool and signature information of the management and control module (1101-1103) for the first available data pool; and
receiving, by the management and control module (1101-1103), second information from the cloud platform (1201-1203), wherein the second information comprises the first available data pool and signature information of the cloud platform (1201-1203) for the first available data pool, or the second information comprises the first available data pool and signature information of the cloud platform (1201-1203) for the first information.

10. The method according to claim 8 or 9, wherein the configuration information comprises at least one of an available data deletion instruction and an available data modification instruction.

11. The method according to any one of claims 8 to 10, wherein the method further comprises:
sending, by the management and control module (1101-1103), the first data to an audit system.

12. A computer storage medium, wherein the computer storage medium stores a computer program, and when the program is executed by a computer, the computer is enabled to implement the method according to any one of claims 8 to 11.

13. A computer program product, wherein the computer program product stores instructions, and when the instructions are executed by a computer, the computer is enabled to implement the method according to any one of claims 8 to 11.

## Patentansprüche

1. Cloud-Datenverarbeitungssystem, das eine Cloud-Site (1301-1303), eine Cloud-Plattform (1201-1203) und ein Verwaltungs- und Steuermodul (1101-1103) umfasst, wobei das Verwaltungs- und Steuermodul (1101-1103) dazu konfiguriert ist, durch die Cloud-Site (1301-1303) an die Cloud-Plattform (1201-1203) gesendete Daten zu verwalten und zu steuern;
wobei die Cloud-Site (1301-1303) dazu konfiguriert ist, erste Daten zu erzeugen und die ersten Daten an das Verwaltungs- und Steuermodul (1101-1103) zu senden;
wobei das Verwaltungs- und Steuermodul (1101-1103) dazu konfiguriert ist, die ersten Daten basierend auf einem ersten verfügbaren Datenpool zu verifizieren und die ersten Daten bei Bestimmen, dass die ersten Daten die Verifizierung basierend auf dem ersten verfügbaren Datenpool bestehen, an die Cloud-Plattform (1201-1203) zu senden, wobei der erste verfügbare Datenpool ein Datenpool ist, der basierend auf Konfigurationsinformationen eines Benutzers eines Cloud-Dienstes bestimmt wird, der durch die Cloud-Site (1301-1303) bereitgestellt wird; und
wobei die Cloud-Plattform (1201-1203) dazu konfiguriert ist, die ersten Daten zu speichern,
wobei der erste Datenpool N Gruppen von Daten umfasst, jede der N Gruppen von Daten Kategorieinformationen verfügbarer Daten und Wertinformationen der verfügbaren Daten umfasst und N eine positive ganze Zahl ist; und
wobei das Verwaltungs- und Steuermodul (1101-1103) ferner dazu konfiguriert ist, von der Cloud-Plattform einen zweiten verfügbaren Datenpool zu erhalten, der M Gruppen von Daten umfasst, und den ersten verfügbaren Datenpool in den M Gruppen von Daten basierend auf den Konfigurationsinformationen zu bestimmen, wobei jede der M Gruppen von Daten Kategorieinformationen verfügbarer Daten und Wertinformationen der verfügbaren Daten umfasst und M eine positive ganze Zahl größer als oder gleich N ist.

2. System nach Anspruch 1, wobei
das Verwaltungs- und Steuermodul (1101-1103) ferner dazu konfiguriert ist, erste Informationen an die Cloud-Plattform (1201-1203) zu senden, wobei die ersten Informationen den ersten verfügbaren Datenpool und Signaturinformationen des Verwaltungs- und Steuermoduls (1101-1103) für den ersten verfügbaren Datenpool umfassen;
die Cloud-Plattform (1201-1203) ferner dazu konfiguriert ist, zweite Informationen an das Verwaltungs- und Steuermodul (1101-1103) zu senden, wobei die zweiten Informationen den ersten verfügbaren Datenpool und Signaturinformationen der Cloud-Plattform (1201-1203) für den ersten verfügbaren Datenpool umfassen oder die zweiten Informationen den ersten verfügbaren Datenpool und Signaturinformationen der Cloud-Plattform (1201-1203) für die ersten Informationen umfassen; und
die Cloud-Plattform (1201-1203) ferner dazu konfiguriert ist, die ersten Daten basierend auf dem ersten verfügbaren Datenpool zu verifizieren und die ersten Daten nach Bestimmen, dass die ersten Daten die Verifizierung basierend auf dem ersten verfügbaren Datenpool bestehen, zu speichern.

3. System nach Anspruch 2, wobei
das Verwaltungs- und Steuermodul (1101-1103) ferner dazu konfiguriert ist, die ersten Informationen an die Cloud-Site (1301-1303) zu senden; und
die Cloud-Site (1301-1303) ferner dazu konfiguriert ist, die ersten Daten basierend auf dem ersten verfügbaren Datenpool zu erzeugen.

4. System nach einem der Ansprüche 1 bis 3, wobei der erste verfügbare Datenpool ferner Signaturinformationen umfasst, die jeder der N Gruppen von Daten entsprechen, und die Signaturinformationen Signaturinformationen des Verwaltungs- und Steuermoduls (1101-1103) für jede Gruppe von Daten und/oder Signaturinformationen der Cloud-Plattform (1201-1203) für jede Gruppe von Daten umfassen; und
wobei das Verwaltungs- und Steuermodul (1101-1103) ferner zu Folgendem konfiguriert ist: wenn ein Datensendemodus ein nicht-direkter Verbindungsmodus ist, Bestimmen von Signaturinformationen, die den ersten Daten in dem ersten verfügbaren Datenpool entsprechen, und Senden der Signaturinformationen, die den ersten Daten entsprechen, an die Cloud-Plattform (1201-1203).

5. System nach einem der Ansprüche 1 bis 3, wobei
das Verwaltungs- und Steuermodul (1101-1103) ferner zu Folgendem konfiguriert ist: wenn ein Datensendemodus ein direkter Verbindungsmodus ist, Senden von Signaturinformationen des Verwaltungs- und Steuermoduls (1101-1103) für die ersten Daten an die Cloud-Plattform (1201-1203).

6. System nach einem der Ansprüche 1 bis 5, wobei der erste verfügbare Datenpool ferner eine Senderichtlinie umfasst und die Senderichtlinie Sendezeit und/oder eine Sendesequenz umfasst; und
wobei das Verwaltungs- und Steuermodul (1101-1103) ferner dazu konfiguriert ist, die ersten Daten gemäß der Sende(S403)-Richtlinie an die Cloud-Plattform (1201-1203) zu senden.

7. System nach einem der Ansprüche 1 bis 6, wobei das System ferner ein Prüfsystem umfasst; und
wobei das Verwaltungs- und Steuermodul (1101-1103) ferner dazu konfiguriert ist, die ersten Daten an das (optionale) Prüfsystem zu senden, um dem (optionalen) Prüfsystem zu ermöglichen, die ersten Daten zu prüfen.

8. Cloud-Datenverarbeitungsverfahren basierend auf einem Verwaltungs- und Steuermodul (1101-1103), umfassend:
Empfangen (S401), durch das Verwaltungs- und Steuermodul (1101-1103), erster Daten von einer Cloud-Site (1301-1303), wobei das Verwaltungs- und Steuermodul (1101-1103) dazu konfiguriert ist, durch die Cloud-Site (1301-1303) an eine Cloud-Plattform (1201-1203) gesendete Daten zu verwalten und zu steuern;
Verifizieren (S402), durch das Verwaltungs- und Steuermodul (1101-1103), der ersten Daten basierend auf einem ersten verfügbaren Datenpool, wobei der erste verfügbare Datenpool ein Datenpool ist, der basierend auf Konfigurationsinformationen eines Benutzers eines durch die Cloud-Site (1301-1303) bereitgestellten Cloud-Dienstes bestimmt wird; und
Senden (S403), durch das Verwaltungs- und Steuermodul (1101-1103), der ersten Daten an die Cloud-Plattform (1201-1203) bei Bestimmen, dass die ersten Daten die Verifizierung basierend auf dem ersten verfügbaren Datenpool bestehen,
wobei der erste Datenpool N Gruppen von Daten umfasst, jede der N Gruppen von Daten Kategorieinformationen verfügbarer Daten und Wertinformationen der verfügbaren Daten umfasst und N eine positive ganze Zahl ist; und
wobei vor dem Verifizieren (S402), durch das Verwaltungs- und Steuermodul (1101-1103), der ersten Daten basierend auf einem ersten verfügbaren Datenpool, das Verfahren ferner Folgendes umfasst:
Empfangen, durch das Verwaltungs- und Steuermodul (1101-1103), eines zweiten verfügbaren Datenpools von der Cloud-Plattform (1201-1203), wobei der zweite verfügbare Datenpool M Gruppen von Daten umfasst, jede der M Gruppen von Daten Kategorieinformationen verfügbarer Daten und Wertinformationen der verfügbaren Daten umfasst und M eine positive ganze Zahl größer als oder gleich N ist; und
Bestimmen, durch das Verwaltungs- und Steuermodul (1101-1103), des ersten verfügbaren Datenpools in den M Gruppen von Daten basierend auf den Konfigurationsinformationen.

9. Verfahren nach Anspruch 8, wobei das Verfahren ferner Folgendes umfasst:
Senden, durch das Verwaltungs- und Steuermodul (1101-1103), erster Informationen an die Cloud-Plattform (1201-1203), wobei die ersten Informationen den ersten verfügbaren Datenpool und Signaturinformationen des Verwaltungs- und Steuermoduls (1101-1103) für den ersten verfügbaren Datenpool umfassen; und
Empfangen, durch das Verwaltungs- und Steuermodul (1101-1103), zweiter Informationen von der Cloud-Plattform (1201-1203), wobei die zweiten Informationen den ersten verfügbaren Datenpool und Signaturinformationen der Cloud-Plattform (1201-1203) für den ersten verfügbaren Datenpool umfassen oder die zweiten Informationen den ersten verfügbaren Datenpool und Signaturinformationen der Cloud-Plattform (1201-1203) für die ersten Informationen umfassen.

10. Verfahren nach Anspruch 8 oder 9, wobei die Konfigurationsinformationen mindestens eine einer Anweisung zum Löschen verfügbarer Daten und einer Anweisung zur Modifikation verfügbarer Daten umfassen.

11. Verfahren nach einem der Ansprüche 8 bis 10, wobei das Verfahren ferner Folgendes umfasst: Senden, durch das Verwaltungs- und Steuermodul (1101-1103), der ersten Daten an ein Prüfsystem.

12. Computerspeichermedium, wobei das Computerspeichermedium ein Computerprogramm speichert und, wenn das Programm durch einen Computer ausgeführt wird, dem Computer ermöglicht wird, das Verfahren nach einem der Ansprüche 8 bis 11 zu implementieren.

13. Computerprogrammprodukt, wobei das Computerprogrammprodukt Anweisungen speichert und, wenn die Anweisungen durch einen Computer ausgeführt werden, dem Computer ermöglicht wird, das Verfahren nach einem der Ansprüche 8 bis 11 zu implementieren.

## Revendications

1. Système de traitement de données en nuage, comprenant un site en nuage (1301-1303), une plate-forme en nuage (1201-1203) et un module de gestion et de commande (1101-1103), le module de gestion et de commande (1101-1103) étant configuré pour gérer et contrôler les données envoyées par le site en nuage (1301-1303) à la plate-forme en nuage (1201-1203) ;
le site en nuage (1301-1303) étant configuré pour générer des premières données, et envoyer les premières données au module de gestion et de commande (1101-1103) ;
le module de gestion et de commande (1101-1103) étant configuré pour vérifier les premières données sur la base d'un premier ensemble de données disponibles, et envoyer les premières données à la plate-forme en nuage (1201-1203) lors de la détermination du fait que les premières données réussissent la vérification sur la base du premier ensemble de données disponibles, le premier ensemble de données disponibles étant un ensemble de données déterminé sur la base des informations de configuration d'un utilisateur d'un service en nuage fourni par le site en nuage (1301-1303) ; et
la plate-forme en nuage (1201-1203) étant configurée pour stocker les premières données,
le premier ensemble de données comprenant N groupes de données, chacun des N groupes de données comprenant des informations de catégorie de données disponibles et des informations de valeur des données disponibles, et N étant un entier positif ; et
le module de gestion et de commande (1101-1103) étant en outre configuré pour obtenir, à partir de la plate-forme en nuage, un deuxième ensemble de données disponibles comprenant M groupes de données, et déterminer le premier ensemble de données disponibles dans les M groupes de données sur la base des informations de configuration, chacun des M groupes de données comprenant des informations de catégorie de données disponibles et des informations de valeur des données disponibles, et M étant un entier positif supérieur ou égal à N.

2. Système selon la revendication 1, dans lequel :
le module de gestion et de commande (1101-1103) est en outre configuré pour envoyer des premières informations à la plate-forme en nuage (1201-1203), les premières informations comprenant le premier ensemble de données disponibles et des informations de signature du module de gestion et de commande (1101-1103) pour le premier ensemble de données disponibles ;
la plate-forme en nuage (1201-1203) est en outre configurée pour envoyer des deuxièmes informations au module de gestion et de commande (1101-1103), les deuxièmes informations comprenant le premier ensemble de données disponibles et des informations de signature de la plate-forme en nuage (1201-1203) pour le premier ensemble de données disponibles, ou les deuxièmes informations comprenant le premier ensemble de données disponibles et les informations de signature de la plate-forme en nuage (1201-1203) pour les premières informations ; et
la plate-forme en nuage (1201-1203) est en outre configurée pour vérifier les premières données sur la base du premier ensemble de données disponibles, et stocker les premières données après avoir déterminé que les premières données réussissent la vérification sur la base du premier ensemble de données disponibles.

3. Système selon la revendication 2, dans lequel :
le module de gestion et de commande (1101-1103) est en outre configuré pour envoyer les premières informations au site en nuage (1301-1303) ; et
le site en nuage (1301-1303) est en outre configuré pour générer les premières données sur la base du premier ensemble de données disponibles.

4. Système selon l'une quelconque des revendications 1 à 3, dans lequel le premier ensemble de données disponibles comprend en outre des informations de signature correspondant à chacun des N groupes de données, et les informations de signature comprennent des informations de signature du module de gestion et de commande (1101-1103) pour chaque ensemble de données et/ou des informations de signature de la plate-forme en nuage (1201-1203) pour chaque ensemble de données ; et
le module de gestion et de commande (1101-1103) est en outre configuré pour : lorsqu'un mode d'envoi de données est un mode de connexion non directe, déterminer des informations de signature correspondant aux premières données dans le premier ensemble de données disponibles, et envoyer les informations de signature correspondant aux premières données à la plate-forme en nuage (1201-1203).

5. Système selon l'une quelconque des revendications 1 à 3, dans lequel :
le module de gestion et de commande (1101-1103) est en outre configuré pour : lorsqu'un mode d'envoi de données est un mode de connexion directe, envoyer des informations de signature du module de gestion et de commande (1101-1103) pour les premières données à la plate-forme en nuage (1201-1203).

6. Système selon l'une quelconque des revendications 1 à 5, dans lequel le premier ensemble de données disponibles comprend en outre une politique d'envoi, et la politique d'envoi comprend un temps d'envoi et/ou une séquence d'envoi ; et
le module de gestion et de commande (1101-1103) est en outre configuré pour envoyer les premières données à la plate-forme en nuage (1201-1203) conformément à la politique d'envoi (S403).

7. Système selon l'une quelconque des revendications 1 à 6, le système comprenant en outre un système d'audit :
le module de gestion et de commande (1101-1103) étant en outre configuré pour envoyer les premières données au système d'audit (facultatif), afin de permettre au système d'audit (facultatif) d'examiner les premières données.

8. Procédé de traitement de données en nuage basé sur un module de gestion et de commande (1101-1103), le procédé comprenant les étapes suivantes :
recevoir (S401), par le module de gestion et de commande (1101-1103), des premières données d'un site en nuage (1301-1303), le module de gestion et de commande (1101-1103) étant configuré pour gérer et contrôler les données envoyées par le site en nuage (1301-1303) à une plate-forme en nuage (1201-1203) ;
vérifier (S402), par le module de gestion et de commande (1101-1103), les premières données basées sur un premier ensemble de données disponibles, le premier ensemble de données disponibles étant un ensemble de données déterminé sur la base d'informations de configuration d'un utilisateur d'un service en nuage fourni par le site en nuage (1301-1303) ; et
envoyer (S403), par le module de gestion et de commande (1101-1103), les premières données à destination de la plateforme en nuage (1201-1203) lors de la détermination que les premières données satisfont la vérification sur la base du premier ensemble de données disponibles,
le premier ensemble de données comprenant N groupes de données, chacun des N groupes de données comprenant des informations de catégorie de données disponibles et des informations de valeur des données disponibles, et N étant un entier positif ; et
avant la vérification (S402), par le module de gestion et de commande (1101-1103), des premières données sur la base d'un premier ensemble de données disponibles, le procédé comprend en outre les étapes suivantes :
recevoir, par le module de gestion et de commande (1101-1103), un deuxième ensemble de données disponibles de la plate-forme en nuage (1201-1203), le deuxième ensemble de données disponibles comprenant M groupes de données, chacun des M groupes de données comprenant des informations de catégorie des données disponibles et des informations de valeur des données disponibles, et M étant un entier positif supérieur ou égal à N ; et
déterminer, par le module de gestion et de commande (1101-1103), le premier ensemble de données disponibles dans les M groupes de données sur la base des informations de configuration.

9. Procédé selon la revendication 8, dans lequel le procédé comprend en outre les étapes suivantes :
envoyer, par le module de gestion et de commande (1101-1103), des premières informations à la plate-forme en nuage (1201-1203), les premières informations comprenant le premier ensemble de données disponibles et des informations de signature du module de gestion et de commande (1101-1103) pour le premier ensemble de données disponibles ; et
recevoir, par le module de gestion et de commande (1101-1103), des deuxièmes informations provenant de la plate-forme en nuage (1201-1203), les deuxièmes informations comprenant le premier ensemble de données disponibles et des informations de signature de la plate-forme en nuage (1201-1203) pour le premier ensemble de données disponibles, ou les deuxièmes informations comprenant le premier ensemble de données disponibles et des informations de signature de la plate-forme en nuage (1201-1203) pour les premières informations.

10. Procédé selon la revendication 8 ou la revendication 9, dans lequel les informations de configuration comprennent au moins une instruction parmi une instruction de suppression de données disponibles et une instruction de modification de données disponibles.

11. Procédé selon l'une quelconque des revendications 8 à 10, dans lequel le procédé comprend en outre d'envoyer, par le module de gestion et de commande (1101-1103), des premières données à un système d'audit.

12. Support de stockage informatique, le support de stockage informatique stockant un programme informatique et, lorsque le programme est exécuté par un ordinateur, l'ordinateur étant en mesure de réaliser le procédé selon l'une quelconque des revendications 8 à 11.

13. Produit programme informatique, le produit programme informatique stockant des instructions et, lorsque les instructions sont exécutées par un ordinateur, l'ordinateur est en mesure de réaliser le procédé selon l'une quelconque des revendications 8 à 11.
